# EUROPÄISCHE PATENTSCHRIFT

(11) **EP 1 899 770 B1**
(45) Veröffentlichungstag und Bekanntmachung des Hinweises auf die Patenterteilung: **19.01.2011**
(21) Anmeldenummer: 06752586.5
(22) Anmeldetag: 30.06.2006
(51) Int. Cl.: G05B 19/042, B25J 9/16

(54) **VERFAHREN ZUM HERSTELLEN, AUFHEBEN UND BETREIBEN EINER ZEITWEILIGEN WIRKVERBINDUNG ZWISCHEN EINER MOBILEN BEDIENVORRICHTUNG UND EINER STEUERBAREN EINRICHTUNG, SOWIE DAFÜR AUSGEBILDETE, SICHERE DATENÜBERTRAGUNGSGEGENSTELLE**
METHOD FOR ESTABLISHING, DISCONNECTING AND OPERATING A TEMPORARY ACTIVE CONNECTION BETWEEN A MOBILE OPERATING DEVICE AND A CONTROLLABLE UNIT AND APPROPRIATELY CONFIGURED DATA-TRANSMISSION REMOTE TERMINAL
PROCEDE PERMETTANT D'ETABLIR, D'INTERROMPRE ET DE FAIRE FONCTIONNER UNE LIAISON ACTIVE INTERMITTENTE ENTRE UN DISPOSITIF DE COMMANDE MOBILE ET UN DISPOSITIF POUVANT ETRE COMMANDE, ET POSTE CORRESPONDANT DE TRANSMISSION DE DONNEES SURE

(30) Priorität: 04.07.2005 AT 11162005
(43) Veröffentlichungstag der Anmeldung: 19.03.2008
(73) Patentinhaber: KEBA AG, 4041 Linz (AT)
(72) Erfinder: SCHININGER, Manfred, A-4020 Linz (AT)
(74) Vertreter: Burger, Hannes
(86) Internationale Anmeldenummer: PCT/AT2006/000275
(87) Internationale Veröffentlichungsnummer: WO 2007/002967

(56) Entgegenhaltungen:
- WO-A-03/036324
- DE-A1- 19 920 299

## Beschreibung

Die Erfindung betrifft Verfahren zum Herstellen bzw. Aufheben einer zeitweiligen datentechnischen und/oder signaltechnischen Wirkverbindung zwischen einer mobilen Bedienvorrichtung und einer steuerbaren technischen Einrichtung, wie sie in den Ansprüchen 1, 13 angegeben sind, sowie eine dafür ausgebildete, sichere Datenübertragungsgegenstelle gemäß Anspruch 16.

Mobile Handbediengeräte, insbesondere drahtlos datengekoppelte Handbediengeräte sind bei entsprechender Leistungsfähigkeit zur Steuerung und Visualisierung verschiedenster hochautomatisierter Prozesse und Maschinen, oder allgemein von steuerbaren technischen Einrichtungen, geeignet. Sie werden jedoch für gewöhnlich nicht ständig benötigt, sondern nur für relativ kurze Zeiträume, beispielsweise zum Auslesen von Betriebsdaten, zum Einstellen von Betriebsparametern und für Programmier-, Service-, Diagnose- oder Wartungsarbeiten.

Für die Betreiber und Benutzer solcher Handbediengeräte ist es daher von entscheidendem Vorteil, wenn diese nur selten benötigten Bediengeräte universell und wechselweise mit unterschiedlichen Maschinen betrieben werden können und mit diesen nur fallweise daten- bzw. signaltechnisch wirkverbunden werden. Damit ist es nicht mehr erforderlich für jede einzelne Maschine bzw. für unterschiedliche Anlagenteile jeweils ein solches bzgl. Beschädigung besonders exponiertes Handbediengerät jeweils vor Ort vorzusehen. Nach der Verwendung muss das Handbediengerät nicht an der Maschine verbleiben, sondern kann wieder an einen geschützten Ort verbracht werden. Die Gefahr eines Missbrauchs durch unbefugte Personen wird dadurch ebenfalls herabgesetzt.

Vorteilhaft ist für den Benutzer auch, dass er unterschiedliche Maschinen stets mit dem gleichen Handbediengerät bedienen kann. Umgewöhnungsprobleme werden dadurch vermieden und wird eine angenehme und komfortable Bedienung unter Verwendung eines einem bestimmten Benutzer persönlich zugeordneten und für diesen passend konfigurierten Bediengerätes, beispielsweise unter Verwendung persönlicher Benutzerprofile, erzielt.

Für den Betreiber von Betriebsanlagen mit einer Vielzahl solcher steuerbaren technischen Einrichtungen ergibt sich insbesondere der Vorteil einer deutlich verminderten Anzahl erforderlicher Handbediengeräte. Durch die Verringerung der Typenvielfalt entsteht darüber hinaus ein Kostenvorteil bei der Lagerhaltung von Ersatzteilen.

Von einer Vielzahl solcher hochautomatisierten steuerbaren technischen Einrichtungen, wie beispielsweise Robotern oder Werkzeugmaschinen, geht während dem Betrieb in deren unmittelbarem physikalischen Einflussbereich eine Gefahr für in der Nähe befindliche Personen aus, so dass diese Gefahrenbereiche durch technisch überwachte Umzäunungen, Abdeckungen und Schutztüren gegen Betreten oder Zugriff durch Personen oder auch gegen Austritt gefährlicher Medien oder Strahlungen geschützt sind. Während diese Schutzmaßnahmen im vollautomatischen Betrieb der Anlagen zweckmäßig sind, ist insbesondere bei der Inbetriebnahme und bei Instandsetzungs- und Wartungsarbeiten oftmals ein zumindest eingeschränkter Sonderbetrieb auch bei geöffneter Umzäunung bzw. entfernter Schutzabdeckung unter Aufsicht einer speziell geschulten Fachkraft erforderlich, so beispielsweise auch beim Teachen, d.h. Programmieren eines Roboters, oder bei ähnlichen Einrichtarbeiten.

Damit ein solcher Betrieb bei geöffneter Umzäunung ermöglicht ist, ist die technische Anlage vom vollautomatischen programmgesteuerten Betrieb in eine von gegebenenfalls mehreren vorgesehenen Sonderbetriebsarten umzuschalten. Dadurch werden bestimmte technische Überwachungseinrichtungen, mit welchen beispielsweise der Gefahrenbereich einer Maschine überwacht wird, außer Funktion gesetzt und durch andere Schutzmaßnahmen wie beispielsweise eine Einschränkung der Maschinenfunktionen ersetzt (z.B. verringerte Verfahrgeschwindigkeit oder Antriebskraft). Zur Umschaltung der Betriebsart einer Maschine befindet sich dazu vorteilhafter Weise ein entsprechender Betriebsartenwahlschalter an einer Bedienkonsole, insbesondere aber unmittelbar an einem mobilen Handbediengerät der steuerbaren technischen Einrichtung. Um ein ungewolltes Umschalten der Betriebsart, insbesondere aus einer Sonderbetriebsart zurück in den vollautomatischen Betrieb noch vor Abschluss der vorgesehenen Wartungsarbeiten, etwa durch Unbefugte oder auch zufolge eines Irrtums einer Person zu verhindern, sind solche Betriebsartenwahlschalter gewöhnlich als Schlüsselschalter ausgeführt.

Gleichzeitig können nach Auswahl einer solchen Sonderbetriebsart potenziell gefahrbringende Steuerkommandos durch die Bedienperson nur abgegeben werden bzw. werden diese Steuerkommandos von der Maschine nur solange ausgeführt, solange bzw. falls die Bedienperson zusätzlich zum jeweiligen Bedienelement einen speziellen Zustimmtaster am Handbediengerät betätigt. Damit ist sichergestellt, dass solche Steuerkommandos nicht versehentlich, sondern nur ganz bewusst durch die Bedienperson abgesetzt werden und beim Erkennen einer Gefahrensituation durch Loslassen des Zustimmtasters oder durch krampfartiges Drücken eines dreistufigen Zustimmtasters in eine weitere dritte Betätigungsstellung eine laufende Maschinenoperation umgehend abgebrochen wird und die Maschine in einen sicheren Betriebszustand übergeführt wird.

Neben einem Betriebsartenwahlschalter und einem Zustimmtaster kann auch ein normgerecht gekennzeichneter Not-Aus Schalter oder ein gleich wirkender, jedoch abweichend gekennzeichneter Maschinen-Stopp Schalter oder Gefahrenschalter am Handbediengerät vorgesehen sein. Bei einer von der Bedienperson erkannten Gefahrensituation kann sie diesen Not-Aus Schalter betätigen und damit die technische Anlage oder zumindest einen bestimmten Teil der Anlage umgehend in einen sicheren Betriebszustand überführen, insbesondere diese Anlage oder diesen Anlagenteil umgehend stillsetzen.

An Betriebsarten-Wahlschalter, Not-Aus-, Stopp- oder Gefahrenschalter, Zustimmtaster und ähnliche Funktions-Schalter, in weiterer Folge gemeinsam als Sicherheitsschaltelemente bezeichnet, werden wegen ihrer Bedeutung für die Sicherheit von Personen ganz besondere Anforderungen an deren Zuverlässigkeit gestellt. Insbesondere werden diese Sicherheitsschaltelemente zumeist elektrisch und teilweise auch mechanisch mehrkreisig ausgeführt, so dass der jeweilige Betätigungszustand mehrfach, zumindest aber doppelt, erfasst und zur funktionalen Steuerung oder zu einem speziellen Sicherheitskreis bzw. einer Sicherheitssteuerung der steuerbaren technischen Einrichtung übertragen wird.

Streng genommen ist zunächst zwischen dem Betätigungszustand und dem Schaltzustand zu unterscheiden, wobei der Schaltzustand normalerweise die elektrisch bzw. technisch erfassbare Abbildung des mechanischen Betätigungszustandes ist. Davon ist weiters der Befehlszustand zu unterscheiden, welcher die Bedeutung des jeweiligen Schaltzustandes repräsentiert. Beispielsweise gibt es bei einem dreistufig ausgebildeten Zustimmtaster drei verschiedene Betätigungszustände (unbetätigt, Zustimmung, Panik-Stopp) und dazu je nach technischer Ausführung zwei oder drei reguläre elektrisch erfassbare Schaltzustände, aber nur zwei daraus abgeleitete Befehlszustände für den Sicherheitskreis (Zustimmung gegeben / Zustimmung nicht gegeben). Mit Ausnahme eines dreistufigen Zustimmtasters entspricht aber bei den anderen Sicherheitsschaltelementen normalerweise ein bestimmter Betätigungszustand genau einem bestimmten, regulären Schaltzustand und genau einem bestimmten Befehlszustand. Im weiteren Text werden daher die Begriffe Schaltzustand und Betätigungszustand im Zusammenhang mit Sicherheitsschaltelementen und dem Sicherheitskreis synonym für den Befehlszustand verwendet. Eine Unterscheidung der Begriffe ist nur dort angebracht, wo ausdrücklich darauf hingewiesen wird, oder wo eine solche Unterscheidung für den Fachmann aus dem Zusammenhang ersichtlich ist.

Sind nun mobile Handbediengeräte und damit auch die auf ihnen angeordneten Sicherheitsschaltelemente nur zeitweise mit der steuerbaren technischen Einrichtung wirkverbunden, so sind im Zusammenhang mit einer üblicherweise beabsichtigten oder fallweise auch unbeabsichtigten Trennung und Herstellung dieser Wirkverbindung ganz besondere Vorkehrungen zu treffen, damit nicht unmittelbar beim Herstellen oder Aufheben der Wirkverbindung von der Bedienperson eigentlich unbeabsichtigte, potenziell gefährdende Betriebszustände entstehen.

Dem nächstliegenden Stand der Technik gehören Verfahren und Vorrichtungen an, welche den Not-Aus Kreis bzw. Sicherheitskreis, in welchen der Not-Aus Schalter des Handbediengerätes eingebunden ist, in der Anschlussstelle überbrücken, sobald die Verbindung zum Handbediengerät getrennt wird. Damit ist gewährleistet, dass die technische Einrichtung auch bei abgekoppeltem Handbediengerät betriebsfähig bleibt. Durch diese Lösung wird jedoch nur die technische Mindestanforderung der Betriebsfähigkeit erfüllt. Der tatsächliche Befehlszustand des Not-Aus Schalters unmittelbar vor dem Trennen wird dabei nicht berücksichtigt bzw. nicht gespeichert bzw. für den Sicherheitskreis signaltechnisch nicht beibehalten, so dass es bei zuvor betätigtem Not-Aus Schalter durch die Abtrennung des Handbediengerätes zu einer indirekten Wegnahme des Not-Aus Befehls kommt, ohne diesen durch eine bewusste Bedienhandlung am Not-Aus Schaltelement (dem Befehlsgerät) herbeizuführen. Umgekehrt kann es beim Verbinden des Handbediengerätes mit der steuerbaren technischen Einrichtung zum ungewollten Unterbrechen des Not-Aus Kreises und damit zur unbeabsichtigten Stillsetzung der Einrichtung kommen, falls der Not-Aus Schalter am Handbediengerät versehentlich betätigt ist. Dies stellt wegen der oftmals relativ umständlichen und langwierigen Startprozedur einer solchen Anlage sowie wegen möglichen Qualitätsproblemen bzw. schwankenden Fertigungsparametern bei den entstehenden Produkten betriebstechnisch eine ausgesprochen unangenehme Störung dar. Vergleichbare Gefahren und Probleme gibt es auch im Zusammenhang mit einem Betriebsartenwahlschalter, welcher am Handbediengerät angebracht ist. Auch hier sollte es durch das An- oder Abkoppeln der Bedieneinrichtung nicht zu einem unbeabsichtigten Wechsel der Betriebsart kommen.

Y. Matsuo und Y. Hashimoto beschreiben in US 5,444,342 A (Fanuc Ltd.) Access-Points für den zeitweiligen Anschluss von mobilen Handbedien- bzw. Programmiergeräten, welche Sicherheitsschaltelemente in der Art eines Not-Aus Schalters oder eines Zustimmtasters umfassen, an die Steuerung und den Sicherheitskreis eines Roboters. Vor dem Trennen der Verbindung ist ein Aktivierungsschalter am Access-Point manuell zu betätigen, wodurch der Not-Aus Kreis an der Anschlussstelle überbrückt wird, so dass es zu keiner ungewollten Stillsetzung des Roboters kommt. Es sind wahlweise mehrere, alternativ verwendbare Anschlussstellen vorgesehen und das Wechseln der Anschlussstelle ohne Abschaltung des Roboters wird als ausdrücklicher Vorteil herausgestrichen. Auf die Problematik möglicherweise konkurrierender Funktionen bei irrtümlicher oder missbräuchlicher, gleichzeitiger Verwendung mehrerer Handbediengeräte an mehreren Anschlussstellen wird nicht eingegangen. In einem solchen Fall kommt es bei der Ausgestaltung gemäß einem angegebenen Ausführungsbeispiel sogar zu einem ungewollten und gefährlichen außer Funktion setzen des Not-Aus Schalters eines Bediengerätes durch Parallelschaltung eines zweiten Not-Aus Schalters an einem zweiten Gerät! Eine drahtlose datentechnische Anbindung eines Handbediengerätes wird nicht beschrieben.

In der Schrift JP 7065908 A2 offenbart K. Hara (Yaskawa Electric Corp.) eine automatische Überbrückung des Not-Aus Kreises in einer Anschaltbox mittels einem Relais, so dass anschließend das mobile Handbediengerät von der Anschaltbox abgetrennt werden kann, ohne dadurch die steuerbare technische Einrichtung in den Not-Aus Zustand zu versetzen. Der Zustand der Steckverbindung wird mittels eines zusätzlichen, trennend voreilenden (verkürzten) Kontaktpaares überprüft bzw. wird damit das Relais zur Überbrückung des Not-Aus Kreises angesteuert. Eine Speicherung des vor der Abtrennung bestehenden Betätigungszustandes des Not-Aus Schalters erfolgt nicht. Eine Trennung des Handbediengerätes, von welchem aus ein Not-Aus Befehl ausgelöst wurde, führt zur Aufhebung des Not-Aus Befehls und damit zur potenziell ungewollten und unbewussten Freigabe der technischen Einrichtung für einen Wiederanlauf.

In der Schrift DE 199 20 299 A1 (Siemens) offenbaren G. Rumpler, G. Kahle-Nobis und C. Meier eine sichere Datenverbindung zur funktechnischen Ankopplung eines mit Sicherheitsschaltelementen ausgestatteten Handbediengerätes an den Sicherheitskreis von Maschinen und Anlagenteilen. Es werden zahlreiche Methoden zur Fehlerabsicherung der Datenkommunikation beschrieben. Eine Speicherung von sicherheitsbezogenen Signalzuständen in der Basisstation für den Zeitraum ohne einer bestehenden Daten- oder Signalverbindung zum Handbediengerät wird ebenso wenig beschrieben wie eine Überprüfung oder ein Vergleich des Schaltzustandes der Sicherheitsschaltelemente bei der Herstellung der Verbindung. Das Problem einer vom Benutzer unbeabsichtigten Änderung des Zustandes des Sicherheitskreises zufolge der Herstellung oder Aufhebung der Wirkverbindung wird in dieser Schrift nicht einmal ansatzweise erkannt.

Die Offenbarungen von K. Aimi et. al. aus der Schrift JP 2002127075 A2 (Matsushita Electric Ind. Co. Ltd.) setzen auf den Stand der Technik aus der US 5,444,342 A auf. Allerdings wird hier die Überbrückung des Not-Aus Kreises und die Spannungsversorgung des Handbediengerätes nicht durch manuelle Betätigung eines Aktivierungsschalters aktiviert, sondern automatisch durch eine Überwachungseinrichtung, welche den Verbindungszustand an der Anschlussstelle überprüft. Eine unvollständig hergestellte Steckverbindung wird erkannt und eine Freigabe der Steuerfunktionen bzw. der Spannungsversorgung zum Handbediengerät verhindert. Zum Erkennen einer sicher hergestellten Signalverbindung wird unter anderem ebenfalls die Verwendung eines trennend voreilenden (verkürzten) Kontaktes in der mehrpoligen Steckverbindung vorgeschlagen. Das Problem einer unbeabsichtigten Änderung des Zustandes des Sicherheitskreises beim Herstellen und Aufheben der Wirkverbindung verbleibt unbedacht.

Im Dokument WO 02/078915 A1 (ABB AB) beschreiben S. Johanessen, J. Endresen und R. Sjöberg eine drahtlose datentechnische Anbindung eines mobilen Bediengerätes mit einem Not-Aus Schalter an die Steuerung eines Roboters. Der Betätigungszustand des Not-Aus Tasters wird periodisch in Nachrichten kodiert übermittelt. Auf Empfängerseite werden innerhalb bestimmter Zeitabschnitte diese Nachrichten ausgewertet. Aufeinanderfolgende Zeitabschnitte, in denen keine fehlerfreien Nachrichten über einen unbetätigten Not-Aus Betätigungszustand empfangen werden, werden gezählt. Bei einer entsprechenden Anzahl solcher aufeinander folgender Abschnitte wird auf Empfängerseite ein Not-Aus Signalzustand generiert und in den Sicherheitskreis des Roboters eingespeist. Eine Speicherung des zuletzt gültig übermittelten Not-Aus Betätigungszustandes über den Zeitpunkt der logischen Trennung der Datenverbindung hinaus wird nicht dargelegt. Das Problem einer unbeabsichtigten Änderung des Zustandes des Sicherheitskreises beim Herstellen und Aufheben der Wirkverbindung verbleibt unbedacht.

In der Schrift EP 1 260 951 A2 (Siemens AG) beschreibt G. Rieger einen Access-Point für den zeitweiligen Anschluss eines mobilen Bedien- und Beobachtungsgerätes (BuB) an einen Feldbus. Dabei wird hauptsächlich der Problematik begegnet, dass die hohe erforderliche Leitungsqualität der Feldbusverbindungen zum Sicherstellen entsprechend hoher Echtzeitanforderungen üblicherweise nur mit fest installierten Terminals erreicht werden kann. Die Access-Points sind daher als Gateways ausgebildet. Sie weisen eigene Verarbeitungseinheiten und auch Speicher auf. Hervorgehoben wird, dass bei dieser Ausgestaltung die mobile BuB-Einheit auch nicht ständig mit Spannung versorgt werden muss, sondern nur fallweise bei der Vornahme entsprechender Bedien- und Beobachtungshandlungen. Alternativ zur Verwendung einer Kabelverbindung wird eine Funkverbindung zwischen Access-Point und mobiler BuB-Einheit vorgeschlagen. Allerdings bleibt die Verwendung von Sicherheitsschaltelementen mit ihren speziellen sicherheitstechnischen Anforderungen unberücksichtigt.

In der Schrift JP 2003136447 A2 (Daihen Corp.) wird von T. Minami und T. Kusano ebenfalls eine Anschaltbox für ein Handbediengerät an einem Roboter beschrieben, in welchem bei abgestecktem Bediengerät der Not-Aus Kreis mit einem Relais überbrückt wird und somit das Handbediengerät von der steuerbaren technische Einrichtung getrennt werden kann, ohne dadurch die Einrichtung stillzusetzen. Die Überbrückung kann entweder mittels einem manuell zu betätigenden Schalter oder auch automatisch zufolge einer Verbindungsüberprüfung ausgelöst werden. Eine Speicherung und signaltechnische Aufrechterhaltung des letztgültig festgestellten Betätigungs- bzw. Befehlszustandes des Not-Aus Schalters erfolgt nicht.

W. Gruner und G. Rieger beschreiben in der Schrift EP 1 353 418 A2 (Siemens AG) ein System zur Ankopplung einer mobilen Dateneinheit (BuB) an einen Feldbus, wobei eine Ankopplungseinheit (AP) für die mobile Dateneinheit an den Feldbus angeschlossen ist, und wobei die Ankopplungseinheit (AP) eine Vorrichtung aufweist, die im angekoppelten Zustand der mobilen Dateneinheit einen Not-Aus Kreis des Feldbusses durch die Dateneinheit (BuB) schleift und im abgekoppelten Zustand kurzschließt. Auch hieraus ist keine Anregung für eine Speicherung des letzten Befehlszustandes in der Ankopplungseinheit oder für eine Überprüfung des Befehlszustandes des Not-Aus Schalters vor dem Herstellen der Verbindung entnehmbar. Beim An- und Abkoppeln der mobilen Dateneinheit kann es daher unbeabsichtigt zu einer Änderung des Not-Aus Befehlszustandes kommen. Darüber hinaus wird nur die Einbindung des Not-Aus Schalters berucksichtigt, nicht jedoch die Situation bezüglich der ebenfalls sicherheitskritischen Zustimmtaster und Betriebsartenwahlschalter. Es sind mehrere Access-Points vorgesehen, an denen das Handbediengerät angeschlossen werden kann. Auf die Möglichkeit der Bedienung einer steuerbaren technischen Einrichtung ausgehend von mehreren alternativ verwendbaren Access-Points unter Ausschluss konkurrierender Zustände beim Versuch, gleichzeitig mehrere Handbediengeräte anzuschließen, wird in diesem Dokument ebenfalls nicht eingegangen. Eine drahtlose Anbindung des Handbediengerätes ist nicht beschrieben.

In der Schrift EP 1 407 860 A2 wird von Y. Hashimoto und Y. Kubo eine mehrkreisige bzw. mehrkanalige Übertragung sicherheitsgerichteter Signalzustände eines Not-Aus Schalters ausgehend von einem drahtlos datengekoppelten Handbediengerät an die Steuerung eines Roboters beschrieben. Eine Speicherung des zuletzt gültig übermittelten Not-Aus Befehlszustandes in der Basisstation über die Bestandsdauer der Datenverbindung hinaus, oder eine Überprüfung des Befehlschaltzustandes des Not-Aus Schalters vor dem Herstellen der Verbindung, wird nicht beschrieben und auch nicht angeregt.

Die WO 03/036324 A (ABB AB) beschreibt ein industrielles Robotersystem mit einem elektromechanischen Roboter, einer Steuervorrichtung zur Steuerung des Roboters und mit zumindest einer tragbaren Bedienvorrichtung zur Programmierung und manuellen Bedienung des Roboters. Die tragbare Bedienvorrichtung ist dabei zur drahtlosen, datentechnischen Kommunikation mit der Steuervorrichtung ausgebildet. Entsprechend der Lehre in dieser Druckschrift sind räumlich oder flächig abgegrenzte Arbeitsbereiche zu definieren, innerhalb derer eine Bedienung des Roboters mittels der mobilen, bevorzugt drahtlos operierenden Bedienvorrichtung ermöglicht ist. Dabei ist vorgesehen, für jene Fälle, in denen sich der Bediener nur kurzfristig außerhalb des definierten Arbeitsbereiches befindet und diesen vordefinierten Arbeitsbereich rechtzeitig wieder betritt, eine Unterbrechung der Datenverbindung zur Steuervorrichtung des Roboters vermieden wird. Dadurch soll die Kontinuität eines so genannten Teach- bzw. Bedienprozess bzw. die Bedienbarkeit des Robotersystems verbessert werden. Das Problem der Behandlung bzw. Überwachung von Sicherheitsschaltkreisen und eine Berücksichtigung der jeweiligen Schalt- oder Befehlszustände von Sicherheitsschaltelementen auf dem mobilen Bediengerät bleibt in dieser Druckschrift unbedacht.

Aufgabe der Erfindung ist die Schaffung von Verfahren sowie von geeigneten Vorrichtungen zur Durchführung dieser Verfahren, welche eine von der Bedienperson unbeabsichtigte Änderung sicherheitsbezogener Signal- und Befehlszustände bei daten- oder signaltechnischer An-oder Abkopplung bzw. während dem Betrieb einer mobilen, mit Sicherheitsschaltelementen ausgestatteten Bedien- und Beobachtungseinheit zuverlässig verhindern.

Zur Lösung der Aufgabenstellung sind einerseits spezielle Verfahrensmaßnahmen vorgesehen und ist andererseits eine sichere Datenübertragungsgegenstelle in Bezug zur mobilen Bedieneinrichtung ausgebildet, welche mit der Bedieneinrichtung nur zeitweise datentechnisch wirkverbunden ist, jedoch permanent mit dem Sicherheitskreis und gegebenenfalls auch mit der funktionalen Steuerung der technischen Einrichtung wirkverbunden ist. Die Datenübertragungsgegenstelle kann sowohl als eigenständige Komponente ausgebildet sein oder aber beispielsweise auch eine bauliche Einheit mit der funktionalen Steuerung oder einer speziellen Sicherheitssteuerung darstellen.

Der Sicherheitskreis kann sowohl mit funktional getrennten, mehrkreisig ausgeführten Signalleitungen (z.B. als sog. Not-Aus Schleife) oder aber auch mit entsprechend protokollarisch abgesicherten Datenleitungen als Sicherheitsbus ausgeführt sein.

In der sicheren Datenübertragungsgegenstelle sind Speichermittel vorgesehen, in welchen die Schalt- bzw. Befehlszustände von Sicherheitsschaltelementen eines zeitweise wirkverbundenen Handbediengerätes gespeichert werden. Solange die datentechnische Wirkverbindung zwischen dem Handbediengerät und der Gegenstelle aufrecht ist und Steuerkommandos ausgeführt werden können, werden die gespeicherten Schaltzustände den tatsächlichen Schaltzuständen der Sicherheitsschaltelemente bei jeder Änderung der Betätigungszustände nachgeführt. Diese Schaltzustände werden auch an den Sicherheitskreis und/oder die funktionale Steuerung der technischen Einrichtung weitergeleitet. Wird die Wirkverbindung beabsichtigt oder ungeplant aufgehoben, so werden die letzten vor der Trennung vom Handbediengerät gültig erfassten und in der Datenübertragungsgegenstelle gespeicherten Schalt- bzw. Befehlszustände für den Sicherheitskreis bzw. die funktionale Steuerung signal- oder datentechnisch äquivalent beibehalten. Zustimmtastersignale werden allerdings nicht gespeichert, da das Zustimmsignal nur gültig ist, solange zweifelsfrei sichergestellt ist, dass die Bedienperson auch tatsächlich den Zustimmtaster betätigt. Außerdem wird der Zustimmtaster nur in Sonderbetriebsarten unmittelbar im Zusammenhang mit der Abgabe von Steuerkommandos benötigt, so dass eine Speicherung bei abgekoppeltem Handbediengerät nicht erforderlich ist. Das Zustimmtastersignal wird daher bei aufgehobener Wirkverbindung zum Bediengerät immer inaktiv, d.h. äquivalent zu einem unbetätigten Zustimmtaster in den Sicherheitskreis eingespeist.

Wird zu einem späteren Zeitpunkt erneut eine datentechnische Wirkverbindung von einem Handbediengerät zur Datenübertragungsgegenstelle hergestellt, so bleiben zunächst alle oder zumindest bestimmte Steuerbefehle gesperrt und die aktuellen Befehls- bzw. Schaltzustände der Sicherheitsschaltelemente werden vorerst noch nicht an den Sicherheitskreis weitergeleitet. Es wird zuerst ein Vergleich der am Handbediengerät tatsächlich festgestellten Befehlszustände der Sicherheitsschaltelemente mit den in der Gegenstelle gespeicherten Zuständen vorgenommen. Wird dabei eine Abweichung festgestellt, so wird der Benutzer aufgefordert, eine Anpassung der Betätigungszustände vorzunehmen, oder es wird der Benutzer zumindest über die Diskrepanz informiert und für die Herstellung der Wirkverbindung zu einer zustimmenden Bedienhandlung aufgefordert. Erst wenn die Betätigungszustände mit den gespeicherten Zuständen übereinstimmen bzw. wenn der Benutzer trotz Kenntnisnahme der Abweichung dem Verbindungsaufbau zustimmt, wird die datentechnische Ankopplung vervollständigt. Alle weiteren Änderungen der Schaltzustände der Sicherheitsschaltelemente werden nun unverzüglich auch in den Speicher übernommen sowie in den Sicherheitskreis eingekoppelt. Auch die zuvor gesperrten Steuerbefehle werden nun freigeschaltet.

Eine Änderung der sicherheitsrelevanten Signale und Betriebszustände im Zusammenhang mit dem Herstellen oder Aufheben einer datentechnischen Wirkverbindung zwischen Handbediengerät und der steuerbaren technischen Einrichtung erfolgt nur durch eine bewusste Bedienhandlung der Bedienperson an jenen Sicherheitsschaltelementen, welche diesen Signalen bzw. Sicherheitsfunktionen eindeutig zugeordnet sind.

Weitere vorteilhafte, optionale Ausgestaltungen der Erfindung betreffen die zusätzliche Identitizierung und Registrierung jener Bedienperson, welche beispielsweise eine bestimmte Sonderbetriebsart für die Durchführung von Wartungs- oder Programmierarbeiten eingestellt hat. Es wird damit technisch sichergestellt, dass nur genau diese Bedienperson diese Sonderbetriebsart wieder aufheben kann. Eine unabsichtliche oder unbefugte Änderung der Betriebsart mit einer möglichen Gefährdung von Personen oder Sachwerten ist damit verhindert. Das Anbringen der relativ teuren, sicherheitstechnisch mehrkreisig ausgeführten Schlüsselschalter für die Betriebsartenwahl entfällt dadurch ebenso wie die verbreiteten Probleme zufolge der mechanischen Schlüssel. Bei diesen Schlüsseln besteht allgemein die Gefahr, dass sie verloren gehen oder dass sie, um ein Verlieren zu vermeiden, im Schlüsselschalter stecken gelassen werden und damit die eigentlich vorgesehene Sicherheitsfunktion gegen unbefugte Schalthandlungen verlieren.

Unabhängig von der zuvor angegebenen, sicheren Datenübertragungsgegenstelle wird gemäß Anspruch 1 auch ein erfindungsgemäßes, sicheres Verfahren zum Herstellen einer signal- bzw. datentechnischen Wirkverbindung zwischen einer mobilen Bedieneinrichtung mit zumindest einem Sicherheitsschaltelement und einer steuerbaren technischen Einrichtung bzw. deren Steuerung oder deren Sicherheitskreis geschaffen. Die Herstellung der Wirkverbindung erfolgt bevorzugt unter Zwischenschaltung einer speziell ausgebildeten sicheren Datenübertragungsgegenstelle, welche selbstverständlich nicht unbedingt als separate bauliche Einheit ausgebildet sein muss, sondern baulich und auch funktional mit den üblichen Komponenten eines Steuerungssystems kombiniert sein kann. Nahe liegend ist beispielsweise eine Kombination mit der Anschlussstelle für ein kabelgebundenes Handbediengerät oder eine Kombination mit einem Funk-Transmitter für die Anbindung einer drahtlos datengekoppelten Bedieneinrichtung. Sie ist aber auch als Teil oder als Modul der funktionalen Steuerung oder einer speziellen Sicherheitssteuerung ausführbar.

Beim Herstellen der Wirkverbindung wird zunächst nur eine Verbindung zwischen der mobilen Bedienvorrichtung und der sicheren Datenübertragungsgegenstelle hergestellt, wobei jedoch die Sicherheitsschaltelemente der Bedienvorrichtung anfänglich bzw. zu Beginn funktional noch nicht in den Sicherheitskreis eingekoppelt sind und zumindest ein Teil der Steuerkommandos der Bedienvorrichtung noch nicht an die funktionale Steuerung weitergeleitet wird bzw. wobei zumindest die potenziell kritischen Steuerkommandos vorerst noch gesperrt sind.

Erfindungswesentlich ist, dass zunächst der aktuelle Schalt- bzw. Befehlszustand des Sicherheitsschaltelementes bzw. der Sicherheitsschaltelemente der Bedienvorrichtung festgestellt wird und dieser Schaltzustand bzw. diese Schaltzustände mit den Zuständen des Sicherheitskreises verglichen werden. Das Ergebnis dieses Vergleiches ist dann die Grundlage zur weiteren Behandlung all jener Situationen, in denen eine Diskrepanz zwischen dem Schaltzustand des Bedienelementes der Bedienvorrichtung und dem bestehenden Zustand des Sicherheitskreises festgestellt wird. Dadurch wird verhindert, dass es bei einer nachfolgenden Vervollständigung der Wirkverbindung mit einer Einkopplung der tatsächlichen Schaltzustände in den Sicherheitskreis zu einer für die Bedienperson unerwarteten und möglicherweise gefährdenden Änderung des Betriebszustandes der steuerbaren technischen Einrichtung kommt.

Erfindungswesentlich ist dabei, dass der Benutzer noch vor dem vollständigen Herstellen der Wirkverbindung von der Diskrepanz zwischen dem Schaltzustand des Sicherheitsschaltelementes und dem Zustand des Sicherheitskreises vorab informiert wird, so dass eine etwaige Änderung des Betriebszustandes zufolge der Einkopplung in den Sicherheitskreis nicht unerwartet eintritt, sondern eine derartige Zustandsabweichung vom Bediener vorab zumindest zur Kenntnis genommen wird.

Alternativ wird sichergestellt, dass die Einkopplung des Schaltzustandes des Sicherheitsschaltelementes in den Sicherheitskreis erst dann erfolgt, wenn die Bedienperson den Schalt- bzw. Betätigungszustand an den Zustand des Sicherheitskreises angeglichen hat. Durch eine nachfolgende Einkopplung in den Sicherheitskreis ändert sich daher der Zustand des Sicherheitskreises nicht. Eine Änderung erfolgt erst wieder dann, wenn der Benutzer nachfolgend weitere Befehlsänderungen am Sicherheitsschaltelement vornimmt.

Durch die Ausgestaltung des Verfahrens nach Anspruch 2 bzw. 3 erfolgt die vollständige Herstellung der Wirkverbindung, insbesondere die funktionale Einkopplung des Sicherheitsschaltelementes in den Sicherheitskreis erst nach einer abschließenden Bestätigung durch den Benutzer, so dass es insbesondere in Kombination mit den Merkmalen nach Anspruch 2 zu keiner unerwarteten Änderung des Betriebszustandes der steuerbaren Einrichtung zufolge der Herstellung der Wirkverbindung kommt.

Durch die Ausgestaltung des Verfahrens nach Anspruch 4 bzw. 5 ist sichergestellt, dass auch die bestätigende Bedienhandlung selbst in technisch sicherer Weise, d.h. insbesondere einfehlersicher erfasst wird. Als weiterer, besonderer Vorteil wird hierdurch eine echte Funktionsprüfung des verwendeten bzw. künftig unter Umständen dringendst benötigten Sicherheitsschaltelementes noch vor dem Einkoppeln in den Sicherheitskreis möglich. Folglich kann beim Bestehen eines Defektes die Verwendung des Bediengerätes mit einem defekten Sicherheitsschaltelement und das damit einher gehende Sicherheitsrisiko vermieden werden. Durch die Weiterbildung nach Anspruch 5 ist darüber hinaus sichergestellt, dass der Schaltzustand des Sicherheitsschaltelementes und der Zustand des Sicherheitskreises bei der Einkopplung übereinstimmen, so dass keine unerwartete Änderung des Betriebszustandes erfolgt.

Durch die vorteilhafte Ausgestaltung nach Anspruch 6 ist in jedem Fall sichergestellt, dass beim Einkoppeln des Sicherheitsschaltelementes in den Sicherheitskreis keine Änderung des Betriebszustandes ausgelöst wird.

Durch die besonders vorteilhafte Weiterbildung nach Anspruch 7 bzw. 8 wird die Funktion eines absperrbaren Sicherheitsschaltelementes geschaffen, welche vergleichbar ist zu den bekannten, herkömmlich verwendeten Sicherheitsschaltelementen mit mechanischem Schlüssel. Die Sperrfunktion wird dabei in der Datenübertragungsgegenstelle realisiert und nicht in der mobilen Bedienvorrichtung, so dass vorteilhafter Weise die Sperre unabhängig von der verwendeten Bedienvorrichtung wirksam ist.

Durch die Ausgestaltung nach Anspruch 9 werden einem Benutzer zusätzliche Informationen über den Auslöser und die Umstände einer vorliegenden Sperre gegeben. Dies ist beispielsweise dann vorteilhaft, wenn die Aufhebung einer über längere Zeit vorliegenden Sperre scheinbar vom Servicetechniker vergessen wurde und kein offensichtlicher Grund für die Sperre erkennbar ist, tatsächlich aber die Sperre weiterhin erforderlich ist, weil die Maschine bis zum Abschluss einer Reparatur nicht betriebssicher ist. Damit ist auch die Gefahr der leichtfertigen Aufhebung der Sperre durch Personen mit Generalberechtigung minimiert. Derartige Generalberechtigungen sind aus praktischen Überlegungen heraus vorteilhaft und meistens auch vorzusehen.

Durch die vorteilhafte Ausgestaltung des Verfahrens nach Anspruch 10 ist sichergestellt, dass eine Sperre nicht durch Unbefugte aufgehoben werden kann bzw. Änderungen nur durch befugte Personen vorgenommen werden können. Die Eingabe der Benutzerkennung und/oder des Passwortes kann beispielsweise manuell über Eingabemittel in der Art einer Tastatur erfolgen oder aber auch unmittelbar unter Verwendung codierter Datenträger in der Art eines Transponders oder einer Code-Karte.

Die vorteilhafte Weiterbildung des Verfahrens nach Anspruch 11 stellt sicher, dass Bedienhandlungen bzw. Steuerbefehle an die steuerbare technische Einrichtung erst dann abgesetzt bzw. ausgeführt werden können, wenn das Sicherheitsschaltelement funktional in den Sicherheitskreis der steuerbaren Einrichtung eingebunden und damit voll wirksam bzw. einsatzbereit ist.

Durch die besonders sichere Ausgestaltung nach Anspruch 12 wird ausgeschlossen, dass mehrere Bedienvorrichtungen gleichzeitig auf die steuerbare technische Einrichtung einwirken können. Eine ungewollte oder fahrlässig in Kauf genommene, gegenseitige Beeinflussung der Bedienvorrichtungen bzw. der Bedienhandlungen und die daraus resultierende Gefährdung von Personen und Sachwerten wird dadurch sicher verhindert.

Die Aufgabe der Erfindung wird aber auch durch das Verfahren mit den kennzeichnenden Merkmalen des Anspruches 13 gelöst. Das erfindungsgemäße Verfahren stellt sicher, dass durch die Aufhebung der Wirkverbindung zwischen der mobilen Bedienvorrichtung und der steuerbaren technischen Einrichtung keine unbeabsichtigte Änderung des Zustandes des Sicherheitskreises und damit des Betriebszustandes der steuerbaren technischen Einrichtung eintritt. Der Schaltzustand des Sicherheitsschaltelementes wird in einem Speicher der sicheren Datenübertragungsgegenstelle abgebildet und der Zustand für den Sicherheitskreis anhand des gespeicherten Schaltzustandes signaltechnisch äquivalent beibehalten. Danach kann die mobile Bedienvorrichtung informationstechnisch abgekoppelt bzw. gefahrlos außer Betrieb genommen werden. Insbesondere wird der Betriebszustand der steuerbaren technischen Einrichtung dadurch nicht unbeabsichtigt beeinflusst. Erfindungswesentlich ist dabei, dass zusammen mit dem Schalt- bzw. Befehlszustand des Sicherheitsschaltelementes eine Benutzerkennung jenes Benutzers abgespeichert wird, welcher die Änderung des Schaltzustandes bzw. die Aufhebung der Wirkverbindung veranlasst hat. Auch weitere Informationen, wie z.B. über den Zeitpunkt der letzten Änderung oder auch über den Grund der vorgenommenen Änderung des Schaltzustandes, können gespeichert werden.

Eine besonders vorteilhafte Weiterbildung der Erfindung wird gemäß Anspruch 14 geschaffen. Dadurch wird für das Sicherheitsschaltelement ein virtueller Schlüssel geschaffen. Eine unabsichtliche oder unbefugte Veränderung des Schalt- bzw. Befehlszustandes und damit des zugeordneten Betriebszustandes wird somit verhindert.

Die Ausgestaltung nach Anspruch 15 stellt sicher, dass nur die veranlassende Bedienperson selbst oder eine Person mit Kenntnis der angegebenen Zugangskennung die Sperre aufheben kann. Die Funktion realisiert damit eine verbesserte Weiterbildung eines herkömmlichen versperrbaren Sicherheitsschaltelementes mit abziehbarem, mechanischen Schlüssel.

Weiters wird die Aufgabe der Erfindung durch eine Vorrichtung für eine sichere Datenübertragungsgegenstelle mit den Merkmalen gemäß dem Kennzeichenteil von Anspruch 16 gelöst. Die erfindungsgemäße sichere Datenübertragungsgegenstelle bildet eine Einkoppelstelle zwischen einer zeitweilig wirkverbundenen, mobilen Bedieneinheit und dem Sicherheitskreis einer steuerbaren technischen Einrichtung. Die Datenübertragungsgegenstelle ist daten- und/ oder signaltechnisch ständig in den Sicherheitskreis eingebunden. Für die Einbindung in den Sicherheitskreis kommen dabei sowohl potenzialfreie Schaltausgänge oder potenzialbehaftete Signalausgänge, als auch entsprechend ausgestaltete Datenverbindungen in Frage, falls der Sicherheitskreis beispielsweise als Sicherheitsbus ausgestaltet ist. Eine weitere Schnittstelle ist für den zeitweiligen Anschluss einer mobilen Bedienvorrichtung vorgesehen. Hierfür sind verschiedene drahtgebundene oder auch drahtlose Daten- und Signalanbindungen denkbar. Es kommen sowohl zahlreiche Standard-Schnittstellen, wie beispielsweise Ethernet, Profibus, Wireless-LAN oder BlueTooth, als auch proprietäre Schnittstellenformate in Frage. Für die Erfindung ist es dabei unerheblich, ob sich der Punkt, über den die Verbindung mit der mobilen Bedienvorrichtung physikalisch herstellt wird, unmittelbar an der Datenübertragungsgegenstelle befindet, oder ob diese Verbindungsschnittstelle unter Zwischenschaltung weiterer Datenübertragungsmittel an abgesetzten Kontaktstellen oder Sende-/Empfangseinrichtungen ausgeführt ist.

Erfindungsgemäß ist die sichere Datenübertragungseinrichtung mit Speichermitteln ausgestattet, in welchen der Schalt- bzw. Befehlszustand eines Sicherheitsschaltelementes datentechnisch äquivalent abgebildet werden kann und in welchen Speichermitteln der Befehlszustand eines Sicherheitsschaltelementes nach der Aufhebung bzw. Auflösung einer Wirkverbindung zwischen einer mobilen Bedienvorrichtung und der Datenübertragungsgegenstelle zugreitbar gespeichert ist. Dem einschlägigen Fachmann sind zahlreiche Möglichkeiten für eine Speicherung einfacher Schaltzustände bekannt. Beispielhaft seien an dieser Stelle einfache Relais-Anordnungen mit Selbsthaltekontakten, bistabile Relais oder auch diskret aufgebaute oder integrierte Halbleiterspeicher, Magnetspeicher oder dergleichen erwähnt. Weiters ist dem Fachmann unmittelbar klar, dass der Ort der eigentlichen Informationsspeicherung für die Erfindung unerheblich ist, solange die Datenübertragungsgegenstelle Mittel für einen Zugriff auf die gespeicherten Informationen aufweist.

Zudem ist eine flexible, softwarebasierte Anpassung und Ausgestaltung komplexer Datenübertragungsprotokolle möglich. Weiters ist die Ausbildung komplexer und leistungsfähiger Sicherungsmaßnahmen zur Prüfung der Datenintegrität, Zugriffsberechtigung und zur Fehlerkorrektur möglich.

Eine besonders vorteilhafte Weiterbildung der Erfindung wird durch Anspruch 17 offenbart. Dabei wird zur Speicherung des Schaltzustandes ein nichtflüchtiger Speicher eingesetzt. Damit ist sichergestellt, dass der Schaltzustand auch nach einem Ausfall der Energieversorgung erhalten bleibt.

Durch die Ausgestaltung nach Anspruch 18 ist sichergestellt, dass die verschiedenen Schaltzustände des Sicherheitsschaltelementes ausgehend von der Datenübertragungsgegenstelle funktionsäquivalent in den Sicherheitskreis eingekoppelt werden können. Das bedeutet, dass sowohl alle möglichen Schaltzustände des Sicherheitsschaltelementes funktionsgleich durch die Schnittstelle der Datenübertragungsgegenstelle nachgebildet und in den Sicherheitskreis eingekoppelt werden können, als auch, dass sich die Datenübertragungsgegenstelle für den Sicherheitskreis signaltechnisch wie eine fest installierte mobile Bedieneinrichtung verhält. Besondere Vorteile ergeben sich daraus für die Umrüstung bestehender Systeme mit zuvor permanent wirkverbundenen Bedieneinrichtungen oder für die wahlweise Ausstattung einer bestimmten Maschinentype mit permanent wirkverbundenen oder abtrennbaren mobilen Bedienvorrichtungen.

Die vorteilhafte Ausgestaltung nach Anspruch 19 bietet die Möglichkeit einer flexiblen und bezüglich Leitungsführung und Installationsaufwand im Vergleich zu reinen Punkt-zu-Punkt

Verbindungen relativ günstigen Ausgestaltung des Signalweges zwischen einer mobilen Bedienvorrichtung und einer sicheren Datenübertragungsgegenstelle. Insbesondere lässt sich ein solches Netzwerk nicht nur für die Informationsübertragung zwischen Bedienvorrichtung und Datenübertragungsgegenstelle sondern gleichzeitig auch für andere Aufgaben und Komponenten im Umfeld der steuerbaren technischen Einrichtung verwenden.

Mit der Ausgestaltung nach Anspruch 20 wird eine Datenübertragungsgegenstelle mit einer Schnittstelle zur datentechnischen Anbindung konventioneller, kabelgebundener Bedienvorrichtungen bzw. leitungsgebundener Netzwerke geschaffen.

Die bevorzugte Ausführung nach Anspruch 21 ermöglicht eine rasche und unkomplizierte Herstellung und Aufhebung einer Datenverbindung zu einer kabelgebundenen mobilen Bedieneinheit ohne die Notwendigkeit einer besonderen Bedachtnahme auf den jeweiligen Betriebszustand der Bedienvorrichtung und der Datenübertragungsgegenstelle.

Die Datenübertragungsgegenstelle mit dem Merkmalen nach Anspruch 22 ermöglicht eine einfache Energieversorgung von kabelgebundenen mobilen Bedienvorrichtungen, welche Energieversorgung automatisch mit dem Herstellen der Daten- bzw. Signalverbindung hergestellt wird. Eine separate Energieversorgung der Bedienvorrichtung wird dadurch erübrigt. Natürlich kann die Energieversorgung über die Schnittstelle auch ergänzend zu einer unabhängig dazu bereits in der mobilen Bedienvorrichtung vorgesehenen Energieversorgung, beispielsweise einem elektrochemischen Energiespeicher, erfolgen bzw. kann ein solcher Energiespeicher über die Schnittstelle regeneriert werden.

Die besonders vorteilhafte Ausgestaltung der Datenübertragungsgegenstelle nach Anspruch 23 ermöglicht die leitungsfreie Signal- oder Datenankopplung einer mobilen Bedienvorrichtung an die Datenübertragungsgegenstelle bzw. an die steuerbare technische Einrichtung. Damit wird der Bedienperson während der Abgabe der Steuerkommandos maximale Bewegungsfreiheit ermöglicht. Es entfällt damit insbesondere auch das hinsichtlich Beschädigungen im rauen Industrieeinsatz besonders exponierte Verbindungskabel als häufige Ursache von Funktionsausfällen und erforderlichen Instandsetzungsmaßnahmen.

Die vorteilhafte Ausgestaltung nach Anspruch 24 ermöglicht die räumliche bzw. örtliche Trennung zwischen der eigentlichen Ankoppelstelle für die mobile Bedienvorrichtung und der sicheren Datenübertragungsgegenstelle. Damit kann die Datenübertragungsgegenstelle beispielsweise gemeinsam mit der funktionalen Steuerung der steuerbaren technischen Einrichtung in einem abgesetzten Schaltschrank untergebracht sein oder unmittelbar mit der funktionalen Steuerung baulich kombiniert sein, während eine Anschlussstelle oder auch mehrere Anschlussstellen für das mobile Bediengerät in unmittelbarer Nähe des Arbeitsbereiches der Maschine angeordnet ist. Auch die Sende-/Empfangseinheit im Falle einer leitungsfreien Ankopplung der Bedienvorrichtung kann außerhalb des Schaltschrankes angebracht sein, um die abschirmende Wirkung des gewöhnlich als weitgehend geschlossene Blechkonstruktion ausgeführten Schaltschrankes zu vermeiden.

Bei der Ausgestaltung nach Anspruch 25 können mehrere der Datenübertragungsgegenstelle zugeordnete Anschlussstellen für die Herstellung einer Wirkverbindung mit einer mobilen Bedienvorrichtung vorgesehen sein. Dadurch kann im Falle von leitungsgebunden datengekoppelten Bedienvorrichtungen, insbesondere bei räumlich ausgedehnten Anlagen und Maschinen, eine für die jeweils beabsichtigte Steueraufgabe optimale Anschlussstelle gewählt werden und kann so auch die Leitungslänge von der Bedienvorrichtung zur Anschlussstelle kürzer gehalten werden, so dass ein verringertes Unfallrisiko sowie ein geringeres Risiko einer Beschädigung des Anschlusskabels erreicht wird. Im Falle einer leitungsfreien Ankopplung der mobilen Bedienvorrichtung kann durch die Verteilung einer Mehrzahl von Sende-/Empfangsanlagen eine zuverlässigere Funkabdeckung innerhalb des vorgesehenen Aufenthaltsbereiches erzielt werden. Bei Verwendung von Sende-/Empfangsanlagen mit kurzer Reichweite kann weiters eine genauere räumliche Gestaltung des Aufenthaltsbereiches erfolgen, von welchem aus Steuerkommandos an die steuerbare technische Einrichtung abgesetzt werden können.

Die bevorzugte und besonders sichere Ausgestaltung nach Anspruch 26 ermöglicht vor allem die Realisierung von Einfehler-Sicherheit. Insbesondere kann dabei ein einzelner Fehler in der Signalverarbeitung und -übertragung nicht zum Verlust der Sicherheit führen.

Eine weitere Verbesserung der Sicherheit wird durch die Ausgestaltung nach Anspruch 27 erzielt. Dabei werden die digitalen Datenverarbeitungsmittel diversitär in unterschiedlichen Technologien, mit unterschiedlicher Software und unterschiedlicher Schaltung aufgebaut, so dass sich ein einzelner Fehler zufolge eines Designfehlers oder aufgrund einer externen Störung nicht gleichzeitig und gleichartig auf mehrere der unabhängigen Kreise auswirken kann.

Durch die Ausgestaltung nach Anspruch 28 bzw. die Weiterbildung nach Anspruch 29 wirkt die sichere Datenübertragungsgegenstelle nicht nur als eine Kopplungsstelle zwischen einer mobilen Bedienvorrichtung und dem Sicherheitskreis, sondern auch zwischen der mobilen Bedienvorrichtung und der funktionalen Steuerung der steuerbaren technischen Einrichtung. Die Datenübertragungsgegenstelle übernimmt somit auch für die nicht sicherheitsbezogenen bzw. nicht sicherheitskritischen Daten und Signale eine Gateway-Funktion. Dies können verschiedene Funktionen sein, wie z.B. Transformationen zwischen verschiedenen Übertragungsprotokollen, Datenpufferung, Fehlerkorrektur, Integritäts- und Berechtigungsprüfung, Aufbereitung von Grafikdaten usw. Durch diese Gateway-Funktion sind einerseits die Verbindungen von der Datenübertragungsgegenstelle zur mobilen Bedienvorrichtung und andererseits zur funktionalen Steuerung der technische Einrichtung physikalisch getrennt. Daher wird durch das An- und Abkoppeln einer mobilen Bedienvorrichtung die Leitungskonfiguration zwischen der Datenübertragungsgegenstelle und der funktionalen Steuerung nicht verändert, sondern bleibt diese fest verdrahtet und unverändert bestehen. Damit ist es auch einfacher möglich, hochleistungsfähige und zuverlässige Datennetzwerke mit hohem Datendurchsatz und kurzen Echtzeit-Reaktionszeiten für diese Verbindung einzusetzen und kann insbesondere durch Anschluss einer defekten Bedienvorrichtung oder eines defekten Anschlusskabels die restliche Kommunikation über dieses Datennetzwerk nicht in unzulässiger Weise beeinträchtigt werden. Durch diese dritte Schnittstelle zur funktionalen Steuerung kann diese auch unmittelbar auf die Schalt- bzw. Befehlszustände der Sicherheitsschaltelemente der Bedienvorrichtung zugreifen oder über Änderungen dieser Schaltzustände benachrichtigt werden, so dass abgesehen von der unmittelbaren Wirkung auf die steuerbare technische Einrichtung über den Sicherheitskreis auch mittelbare Wirkungen über die funktionale Steuerung vorgesehen werden können.

Die Ausgestaltung nach Anspruch 30 ermöglicht eine Reihe zusätzlicher Funktionen, welche auf der Messung der Zeit oder der Bestimmung eines Zeitpunktes beruhen. Beispielsweise ist dadurch eine zeitlich befristete Sperre einer Maschine oder Anlage möglich, oder es können Informationen bereitgestellt werden, zu welchen Zeitpunkten eine Sperre eingerichtet wurde, oder wann Änderungen am Zustand des Sicherheitskreises veranlasst wurden. Durch eine Protokollierung der eintretenden Änderungen und der jeweiligen Zeitpunkte lassen sich beispielsweise Unfallhergänge leichter rekonstruieren. Weiters können Stillstandszeiten, Instandsetzungszeiten, fällige Serviceintervalle oder Sicherheitsüberprüfungen automatisch erfasst werden.

Die vorteilhaften Ausgestaltungen nach Anspruch 31 bzw. 32 ermöglichen die kompakte Integration der sicheren Datenübertragungsgegenstelle in die funktionale Steuerung der steuerbaren technischen Einrichtung. Die sichere Datenübertragungsgegenstelle kann beispielsweise als Modul einer modular gestalteten Steuerungsbaugruppe oder aber auch als Kombination mit der Koppelstelle, an der die zeitweilige Verbindung mit der mobilen Bedienvorrichtung hergestellt wird, ausgeführt sein. Insbesondere wird dadurch die Ausgestaltung der Datenoder Signalübertragung zwischen den jeweils baulich kombinierten Komponenten deutlich vereinfacht bzw. deren Betriebssicherheit verbessert.

Die Erfindung wird im nachfolgenden anhand der in den Zeichnungen dargestellten Ausführungsbeispiele näher erläutert.

Es zeigen:
- Fig. 1: einen Ausschnitt eines industriellen Fertigungssystems mit mehreren steuer- baren technischen Einrichtungen als einen möglichen Anwendungsfall der erfindungsgemäßen Verfahren und Vorrichtungen;
- Fig. 2: schematisch und beispielhaft die wesentlichen Komponenten einer mobilen Bedien- und Beobachtungsvorrichtung;
- Fig. 3: schematisch und beispielhaft die wesentlichen Komponenten einer erfin- dungsgemäßen sicheren Datenübertragungsgegenstelle;
- Fig. 4: beispielhaft den Ablauf eines erfindungsgemäßen Verfahrens zum Herstel- len einer zeitweiligen datentechnischen Wirkverbindung zwischen einer mobilen Bedien- und Beobachtungseinrichtung mit Sicherheitsschaltele- menten und einer sicheren Datenübertragungsgegenstelle beziehungsweise einer steuerbaren technischen Einrichtung;
- Fig. 5a bis d: beispielhaft die Phasen bei der Etablierung der daten- und signaltechnischen Wirkverbindung von einer mobilen Bedienvorrichtung zu einer steuerbaren technischen Einrichtung.

Einführend sei festgehalten, dass in den beschriebenen, unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

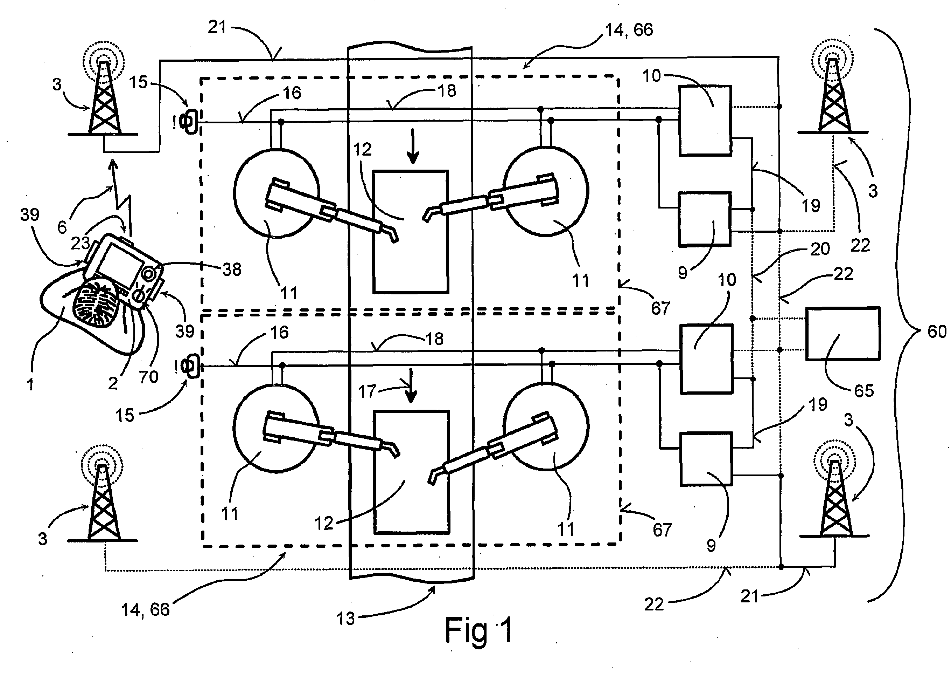

In Fig. 1 ist beispielhaft und schematisch vereinfacht ein Ausschnitt eines industriellen Systems 60 zur Fertigung oder Bearbeitung von Werkstücken 12 unter Zusammenwirken mehrerer automatisiert programmgesteuerter Manipulatoren 11 dargestellt. Die Werkstücke 12 werden durch ein Transportmittel 13 von einer Bearbeitungszelle 66 in die nächste befördert.

Im dargestellten Beispiel werden jeweils zwei der Manipulatoren 11 von einer gemeinsamen Steuerung 10 über entsprechende Steuer- und Sensorverbindungen 18 gesteuert. Selbstverständlich können den Manipulatoren 11 alternativ auch jeweils individuelle Steuerungen zugeordnet sein.

Die jeweils zwei gemeinsam gesteuerten Manipulatoren 11 sind einer gemeinsamen Sicherheitszone 14 zugeordnet, welche räumlich häufig mit einer Bearbeitungszelle 66 öder Bearbeitungsstation übereinstimmt und meist durch entsprechende Schutzzäune, Schutztüren, Gitter oder Absperrungen 67 auch entsprechend wahrnehmbar abgegrenzt ist.

Schaltungstechnisch ist eine Sicherheitszone 14 ein Bereich, dem zumindest ein oder gegebenenfalls mehrere, normalerweise fest verdrahtete Sicherheitsschaltelemente in der Art eines Not-Aus Schalters 15 und entsprechende sicherheitsgerichtete Signalübertragungsmittel, gesamtheitlich als Sicherheitskreis 16 dargestellt, zugeordnet sind. Durch Auslösen eines der zugeordneten Sicherheitsschaltelemente 15 durch eine Person werden alle Manipulatoren 11, Maschinen- und Anlagenteile in der jeweiligen Sicherheitszone 14 zuverlässig und umgehend in einen sicheren Betriebszustand, insbesondere in den Stillstand versetzt. Dadurch können erkannte bestehende oder drohende Gefahrensituationen abgewehrt werden beziehungsweise ungewollte Maschinenoperationen sicher unterbunden werden.

In großen Fertigungsanlagen 60 werden die Steuerungen 10 mehrerer Bearbeitungszellen 66 normalerweise mittels einem Datennetzwerk 20 datentechnisch miteinander und gewöhnlich auch mit einer zentralen Rechenanlage, beziehungsweise einem Server 65, beispielsweise zum Zweck einer zentralen Betriebsdatenerfassung, verbunden. Darüber hinaus können über eine solche zentrale Rechenanlage auch Fernwartung oder Ferndiagnosen durchgeführt werden, zentral organisierte Softwareupdates für die Steuerungen 10 und gegebenenfalls für die mobilen Bedien- und Beobachtungsgeräte 2 durchgeführt werden sowie spezifische Parameter- und Datensätze, insbesondere Benutzer-, Werkzeug- und Maschinenprofile anlagenübergreifend verwaltet werden.

Das dargestellte Fertigungssystem 60 weist weiters eine mobile Bedien- und Beobachtungsvorrichtung - kurz Bedienvorrichtung 2 genannt - in der Art eines mobilen Handbediengerätes auf, mit welchem eine Bedienperson 1 wechselweise die Steuerung von Manipulatoren 11 und Anlagenteilen in den verschiedenen Bearbeitungszellen 66 übernehmen kann.

Während dieser Zeit befinden sich die Anlagenteile der jeweilige Bearbeitungszelle 66 nicht im vollautomatischen Betrieb mit einer Absicherung durch die geschlossene Absperrung 67, sondern in einer abgesicherten und mittels Betriebsartenwahlschalter 70 eingestellten Sonderbetriebsart, in der sich die Bedienperson, beispielsweise für genaue Programmier- und Einstellarbeiten oder für Serviceaufgaben, auch innerhalb der Absperrung 67 aufhalten kann beziehungsweise bei geöffneter Absperrung 67 Bedienhandlungen vornehmen kann. In der abgesicherten Sonderbetriebsart sind sicherheitskritische Maschinenoperationen nur während der aktive Betätigung eines Zustimmtasters 39 am Handbediengerät 2 durch die Bedienperson 1 ermöglicht. Zusätzlich weist das Handbediengerät ein weiteres Sicherheitsschaltelement in der Art eines Stopp-Schalters oder Not-Aus Schalters 38 auf, bei dessen Betätigung alle Maschinenteile in der jeweiligen Sicherheitszone 14 umgehend in einen sicheren Zustand übergeführt werden.

Die mobile Bedienvorrichtung 2 ist datentechnisch vorzugsweise drahtlos über eine integrierte Funkschnittstelle 23, eine Funkdatenverbindung 6 und zumindest eine entsprechende, fest installierte Funkgegenstelle 3 und weiters über eine fest verdrahtete Datenleitung 21 mit einer sicheren Datenübertragungsgegenstelle 9 verbunden. Dabei kann einer Datenübertragungsgegenstelle 9 entweder genau eine Funkgegenstelle 3 zugeordnet sein, beziehungsweise mit dieser sogar baulich kombiniert ausgebildet sein, oder aber es kann zur sicheren flächendeckenden Funkanbindung in weitläufigen Anlagen 60 eine Mehrzahl mittels Datennetzwerk 22 verbundener Funkgegenstellen 3 und gegebenenfalls mehrerer sicherer Datenübertragungsgegenstellen 9 ausgebildet sein. Natürlich kann anstatt der Funkdatenverbindung 6 auch eine herkömmliche leitungsgebundene Datenverbindung vorgesehen sein und können dem entsprechend anstatt der Funkgegenstellen 3 eine oder mehrere Anschlussstellen mit Steckverbindungen in unmittelbarer räumlicher Nähe des vorgesehenen Arbeitsbereiches angeordnet sein.

Die sichere Datenübertragungsgegenstelle 9 ist fest verdrahtet in den Sicherheitskreis 16 der jeweiligen Sicherheitszone 14 beziehungsweise der Bearbeitungszelle 66 eingebunden. Sie leitet die Betätigungs- beziehungsweise Schaltzustände der Sicherheitsschaltelemente 38, 39 einer aktuell datentechnisch angebundenen mobilen Bedienvorrichtung 2 zuverlässig an den Sicherheitskreis 16 weiter. Gleichzeitig werden diese Schaltzustände auch in einem Speicher der sicheren Datenübertragungsgegenstelle 9 eingetragen. Für den Fall einer Auflösung oder Unterbrechung der Datenverbindung 6 erhält die erfindungsgemäße sichere Datenübertragungsgegenstelle 9 die zuletzt gespeicherten Schaltzustände von Not-Aus Schalter 38, Stopp-Schalter, Gefahrenschalter oder Betriebsartenwahlschalter 70 für den Sicherheitskreis 16 bei, so dass es zu keiner unerwünschten oder unbeabsichtigten Veränderung des Betriebszustandes kommt. Beim Wiederherstellen einer Datenverbindung 6 mit einem Handbediengerät 2 werden zunächst Steuerkommandos und vor allem auch die Signalzustände der Sicherheitsschaltelemente 38, 39 und/oder 70 der mobilen Bedienvorrichtung 2 noch nicht von der erfindungsgemäßen sicheren Datenübertragungsgegenstelle 9 an die Steuerung 10 bzw. den Sicherheitskreis 16 weitergeleitet bzw. durchgeschaltet. In der Datenübertragungsgegenstelle 9 wird zunächst geprüft, ob die tatsächlichen Schalt- bzw. Betätigungszustände an der mobilen Bedienvorrichtung 2 mit den in der Gegenstelle 9 gespeicherten und in den Sicherheitskreis 16 eingespeisten Signalzuständen übereinstimmen. Erst wenn eine vollständige Übereinstimmung festgestellt wurde, gegebenenfalls also die Betätigungszustände von der Bedienperson 1 entsprechend hergestellt wurden, schaltet die sichere Datenübertragungsgegenstelle 9 alle nachfolgenden Änderungen der Betätigungszustände auch an den Sicherheitskreis 16 durch und leitet die Steuerkommandos vom Handbediengerät 2 an die Steuerung 10 weiter. Erst dann ist das Handbediengerät 2 vollständig mit der steuerbaren technischen Einrichtung wirkverbunden. Eine Änderung des Not-Aus Zustandes oder der Betriebsart der Anlage erfolgt erst durch eine bewusste Bedienhandlung des Benutzers an den dafür vorgesehenen Sicherheitsschaltelementen 38, 39, 70 und nicht etwa bereits unbeabsichtigt beim Herstellen der Datenverbindung 6.

Weiters ist vorzugsweise eine Datenverbindung 19 zwischen der Datenübertragungsgegenstelle 9 und der funktionalen Steuerung 10 vorgesehen. Mittels dieser Datenverbindung 19 können allgemeine, nicht spezifisch sicherheitskritische Steuerkommandos oder Informationen von der mobilen Bedienvorrichtung 2 über die Datenübertragungsgegenstelle 9 an die Steuerung 10 übermittelt werden. Die Datenübertragung ist natürlich auch in umgekehrter Richtung beziehungsweise bidirektional von der Steuerung 10 über die Datenübertragungsgegenstelle 9 an die mobile Bedienvorrichtung 2 möglich, so dass insbesondere Visualisienmgs-, Betriebs- und Diagnoseinformationen übertragen und über geeignete Ausgabemittel an der mobilen Bedienvorrichtung 2 ausgegeben werden können. Die Datenverbindung 19 kann entweder als eindeutige Punkt-zu-Punkt Verbindung zwischen genau einer Datenübertragungsgegenstelle 9 und genau einer Steuerung 10 ausgebildet sein, oder aber als komplettes Netzwerk 20 mehrere Steuerungen 10, Datenübertragungsgegenstellen 9 sowie gegebenenfalls einen zentralen Server 65 miteinander verbinden. Prinzipiell kann die Datenverbindung 19 aber auch komplett entfallen, wenn die Steuerungen 10 unmittelbar an das Netzwerk 22 angebunden sind und alle nicht sicherheitsbezogenen Informationen zu und von der Steuerung 10 nicht über die Datenübertragungsgegenstellen 9 sondern direkt über die Funkgegenstellen 3 von und zu der mobilen Bedienvorrichtung 2 übertragen werden.

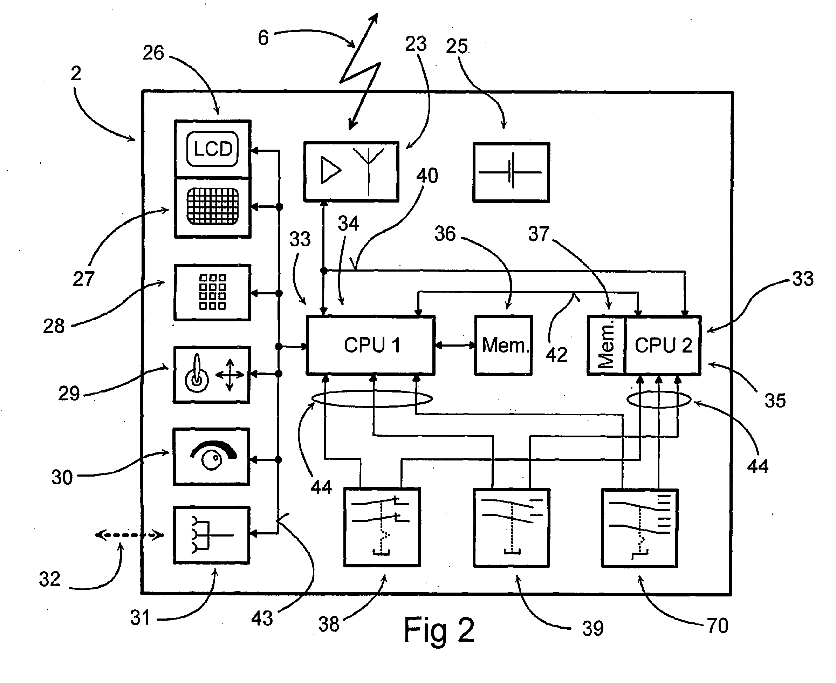

In Fig. 2 ist nun beispielhaft eine weitgehend übliche mobile Bedien- und Beobachtungsvorrichtung 2 mit ihren wesentlichsten und typischen funktionalen Komponenten und datentechnischen Verbindungen dargestellt.

Zur zeitweiligen Herstellung einer datentechnischen Wirkverbindung 6 mit einer steuerbaren technischen Einrichtung weist die Bedienvorrichtung 2 eine entsprechende Schnittstelle, insbesondere eine zur drahtlosen datentechnischen Anbindung geeignete Funkschnittstelle 23 auf. Selbstverständlich ist alternativ auch eine entsprechende leitungsgebundene datentechnische Anbindung, beispielsweise via Ethernet, möglich und auch üblich.

Weiters verfügt die mobile Bedienvorrichtung 2 über speziell ausgeführte Sicherheitsschaltelemente 38, 39, 70 in der Art eines Not-Aus oder Stopp-Schalters 38 mit bekannter mechanischer Verriegelung in der betätigten Stellung sowie gegebenenfalls über einen oder mehrere Zustimmtaster 39 und gegebenenfalls auch über einen Betriebsarten-Wahlschalter 70. Die Zustimmtaster 39 sind während der Ausführung sicherheitskritischer Operationen in einer Sonderbetriebsart der steuerbaren technischen Einrichtung von der Bedienperson 1 ständig betätigt zu halten, so dass diese Zustimmtaster 39 vorzugsweise in einem Griffbereich der mobilen Bedienvorrichtung 2 integriert sind und mit jener Hand, mit der die mobile Bedienvorrichtung 2 gehalten wird gleichzeitig auch zu betätigen sind. Sind mehrere Griffbereiche vorgesehen, um die Bedienvorrichtung 2 je nach Situation unterschiedlich halten zu können oder um eine ergonomische Handhabung sowohl für Rechts- als auch für Linkshänder zu ermöglichen, so ist üblicherweise jedem dieser Griffbereiche ein Zustimmtaster 39 zugeordnet. Die Sicherheitsschaltelemente 38, 39, 70 sind, wie in der Darstellung angedeutet, meist zweikreisig ausgeführt, weisen also mehrere gleichzeitig und unabhängig ausgelöste Kontakte auf.

Weiters verfügt die mobile Bedienvorrichtung 2 über einen ersten Prozessor oder Erfassungsschaltkreis 33, welcher fortwährend und eigenständig die Betätigungs- bzw. Schaltzustände der Sicherheitsschaltelemente 38, 39 und 70 über entsprechende Signalleitungen 44 erfasst und in entsprechenden Datentelegrammen für die Versendung über die Nutzdatenverbindung 6 kodiert.

Parallel dazu ist ein zweiter Prozessor oder Erfassungsschaltkreis 35 vorgesehen, der fortwährend, eigenständig und unabhängig vom ersten Prozessor oder Erfassungsschaltkreis 34 die Schaltzustände der Sicherheitsschaltelemente 38, 39, 70 über entsprechende Signalleitungen erfasst und in entsprechenden Datentelegrammen für die Versendung über die Nutzdatenverbindung 6 kodiert.

Zum Ablegen von Daten sind den beiden Prozessoren oder Erfassungsschaltkreisen 34, 35 jeweils unabhängige Speicher 36 und 37 zugeordnet.

Vorzugsweise sind die beiden Prozessoren 34 und 35 unterschiedlich ausgeführt, gehören unterschiedlichen Prozessorfamilien an, verwenden unterschiedliche Software und unterschiedliche Technologien. Damit ist sichergestellt, dass sich ein einzelner Fehler zufolge eines Hardware- oder Softwarefehlers oder aufgrund äußerer Störeinflüsse nicht gleichzeitig und gleichartig auf beide Prozessoren 34, 35 auswirkt und nicht beide gleichzeitig fehlerhafte Datentelegramme absetzen können, welche einen unbetätigten Not-Aus oder Stopp-Schalter beziehungsweise einen betätigten Zustimmtaster kennzeichnen.

Üblicherweise ist einer der Prozessoren oder Erfassungsschaltkreise 34 vergleichsweise leistungsfähig ausgeführt und übernimmt neben der Erfassung der Betätigungszustände der Sicherheitsschaltelemente 38, 39, 70 auch noch die Kommunikation mit weiteren Peripheriekomponenten der mobilen Bedienvorrichtung 2, beispielsweise mit einem grafikfähigen Display 26 zur ansprechenden Visualisierung von Maschinen- und Prozesszuständen und -daten, einem mit dem Display 26 baulich kombinierten berührungssensitiven Schirm 27 für die Umsetzung flexibler und anspruchsvoller grafikunterstützter Bedienkonzepte, einem Tastenfeld 28 sowie verschiedenen analogen Eingabemitteln wie einem Joystick 29 oder einem Handrad 30. Es kann auch eine Schnittstelle 31 für die Verwendung irgendwelcher Erweiterungsmodule vorgesehen sein. Dabei kann es sich beispielsweise um austauschbare Speichermodule, insbesondere Compact Flash Speicher, USB Speichereinheiten oder um spezielle Schnittstellenmodule in der Art von Ethernet - Netzwerkkarten handeln. Dieser leistungsfähige Prozessor 34 übernimmt auch zumindest einen Großteil der Kommunikation über die Nutzdatenschnittstelle 23 zur Steuerung einer datentechnisch angebundenen steuerbaren technischen Einrichtung beziehungsweise zur Visualisierung der entsprechenden Daten und Zustände. Entsprechend der erforderlichen Leistungsbandbreite weist dieser erste Prozessor meistens einen separat angeordneten größeren Speicher 36 auf.

Der zweite Prozessor oder Erfassungsschaltkreis 35 weist üblicherweise eher geringe Verarbeitungsleistung auf und ist vorzugsweise nur für die zusätzliche und unabhängige Erfassung und Kodierung der Betätigungszustände der Sicherheitsschaltelemente 38, 39, 70 vorgesehen. Vielfach genügt dafür ein einfacher Mikrocontroller mit einem bereits im Mikrocontroller integrierten kleinen Arbeitsspeicher 37. Alternativ kann die Aufgabe des zweiten Prozessors 35 beispielsweise durch einen programmierbaren Logikbaustein erfüllt werden.

Natürlich können alternativ auch zwei unabhängige, relativ einfache Prozessoren oder Erfassungsschaltkreise ausschließlich die sicherheitsrelevanten Funktionen übernehmen und können die bezüglich der erforderlichen Rechenleistung aufwändigeren Funktionen rund um die Visualisierung von einem weiteren, dritten Prozessor übernommen werden.

Zwischen dem ersten und zweiten Prozessor oder Erfassungsschaltkreis 34, 35 ist vorzugsweise auch eine direkte Daten- oder Signalverbindung 42 vorgesehen. Über diese Verbindung 42 können Informationen zwischen den Prozessoren 34 und 35 beispielsweise für einen Kreuzvergleich der unabhängig erfassten Betätigungszustände der Sicherheitsschaltelemente 38, 39, 70 ausgetauscht werden beziehungsweise Parametrierungs- oder Initialisierungsvorgänge durchgeführt werden. Ebenso können über diese Datenverbindung sicherheitsbezogene Nachrichten, welche für sich entsprechend durch eine Sicherheitskodierung gekennzeichnet und durch Prüfinformationen gekapselt sind, von einem der beiden Prozessoren an den jeweils anderen übermittelt und von diesem dann entweder unmittelbar über die Schnittstelle 23 ausgegeben oder in weiteren von diesem anderen Prozessor erstellten Datentelegrammen eingebettet und gemeinsam übermittelt werden.

Weitere, in prozessorbasierten Geräten mit erhöhten Anforderungen an die Zuverlässigkeit übliche Komponenten, wie z.B. Watchdog-Timer oder dergleichen, sind dem Fachmann hinlänglich bekannt und der besseren Übersichtlichkeit wegen nicht dargestellt.

Da moderne mobile Bedienvorrichtungen 2 vorzugsweise als drahtlos datengekoppelte mobile Handbediengeräte ausgeführt sind, ist ein entsprechender integrierter Energiespeicher 25, insbesondere ein elektrochemischer Energiespeicher, vorgesehen. Damit können die Komponenten der mobilen Bedienvorrichtung 2 zumindest zeitweise unabhängig von einer leitungsgebundenen Energieversorgung betrieben werden und wird so eine größtmögliche Mobilität der Bedienperson sichergestellt. Die Verbindungen zur Energieversorgung der Komponenten wurden zum Vorteil der besseren Übersichtlichkeit in der Fig. 2 nicht dargestellt und sind diese dem Fachmann ohnedies bekannt. Dies gilt auch für Komponenten, die dem Austauschen oder Regenerieren des Energiespeichers 25 oder der entsprechenden Aufbereitung der gespeicherten Energie dienen.

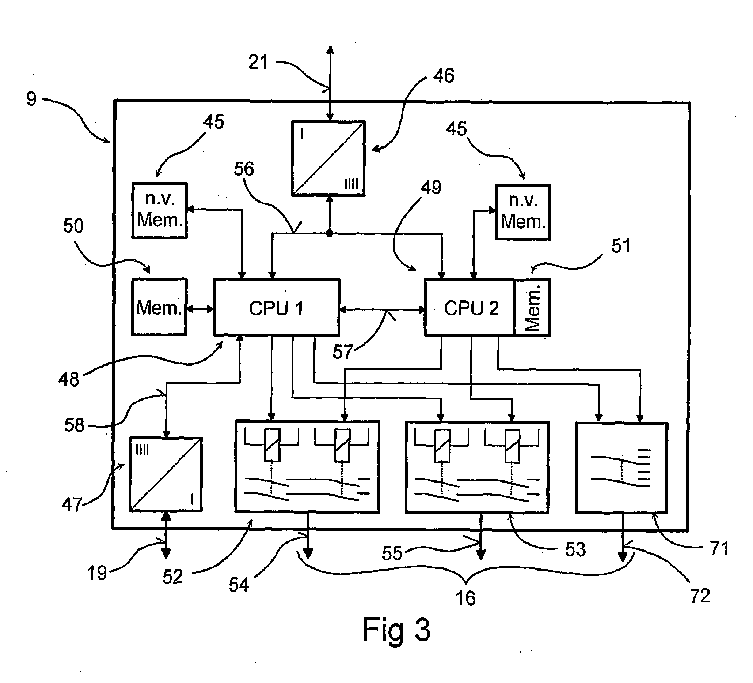

In Fig. 3 ist eine erfindungsgemäße sichere Datenübertragungsgegenstelle 9 mit ihren wesentlichen und typischen Komponenten beispielhaft und schematisch dargestellt.

Die Datenübertragungsgegenstelle 9 weist eine Schnittstelle 46 zur zeitweiligen Herstellung einer Datenverbindung 21 zu einer mobilen Bedien- und Beobachtungsvorrichtung für die Übertragung zumindest von sicherheitsbezogenen Betätigungs- oder Signalzuständen auf. Dabei können entlang dieser Datenverbindung 21 verschiedene Datenübertragungsmittel, beispielsweise eine Sende- und Empfangseinrichtung für Funkwellen, Netzwerkkomponenten, Gateways oder dergleichen zwischengeschaltet sein.

Es sind auch drei Schnittstellen 52, 53 und 71 in Form von Schaltausgängen für eine fest verdrahtete signaltechnische Einbindung der Datenübertragungsgegenstelle 9 in den Sicherheitskreis 16 einer steuerbaren technischen Einrichtung vorgesehen. Die Schnittstelle 52 ist in den Not-Aus Sicherheitskreis 54 eingebunden, die Schnittstelle 53 ist in den Zustimm-Sicherheitskreis 55 eingebunden und die Schnittstelle 71 ist in den Betriebsartensicherheitskreis 72 eingebunden. Wie die verwendeten Symbole der Schnittstellen bereits andeuten, sind diese Schnittstellen vorzugsweise sowohl nach außen in Richtung Sicherheitskreis 16 als auch nach Innen in Richtung der Ansteuerung durch die Komponenten der Datenübertragungsgegenstelle 9 zweikreisig sicher ausgeführt. Alternativ können anstatt der symbolisch dargestellten elektromagnetisch betätigten, potenzialfreien Schaltausgänge auch ähnlich sicher ausgestaltete elektronische Signalausgänge vorgesehen sein oder ebenfalls alternativ oder auch ergänzend zu den Schaltausgängen 52, 53 und 71 eine speziell sicher ausgestaltete Datenschnittstelle zur fest verdrahteten datentechnischen Anbindung an einen speziellen Sicherheitsbus vorgesehen sein. Die dargestellten elektromechanischen Schaltausgänge weisen neben einer zuverlässigen galvanischen Trennung auch den Vorteil auf, dass bei Ausfall der Energieversorgung der Datenübertragungsgegenstelle 9 der Not-Aus- 54 und der Zustimmkreis 55 sicher geöffnet werden und damit die steuerbare technische Einrichtung umgehend in einen sicheren Betriebzustand übergeführt wird.

Analog zur sicheren zweikreisigen Erfassung und Kodierung der Betätigungszustände der Sicherheitsschaltelemente in einer mobilen Bedienvorrichtung 2 durch einen ersten und zweiten Prozessor oder Erfassungsschaltkreis 34, 35 ist auch die elektronische Datenauswertung in der Datenübertragungsgegenstelle 9 zweikreisig ausgeführt. Dabei werden die sicherheitsbezogenen Signalzustände von zumindest einem dritten und einem vierten Prozessor oder Überwachungsschaltkreis 48 und 49 entsprechend der über die Schnittstelle 46 empfangenen Datentelegramme unabhängig zweikreisig empfangen, geprüft und in den Sicherheitskreis 16 eingebunden.

Beiden Prozessoren 48 und 49 sind jeweils geeignete Arbeitsspeicher 50 und 51 zugeordnet. Weiters sind beiden Prozessoren 48, 49 jeweils nichtflüchtige Speicher 45 zugeordnet, in denen zumindest die bei ordnungsgemäßer Datenverbindung zuletzt empfangenen Schaltzustände der Sicherheitsschaltelemente der Bedienvorrichtung energieausfallssicher gespeichert sind.

In gleicher Weise können darin auch Kenndaten eines Benutzers gespeichert werden, welcher die Anlage in einen bestimmten Betriebszustand versetzt und gegen eine unbefugte Änderung gesperrt hat. Alle erwähnten Speicher können sowohl als eigenständige Bauelemente ausgebildet oder aber auch fix in den jeweiligen Prozessoren integriert sein.

Zwischen den beiden Prozessoren 48 und 49 kann auch eine spezielle Daten- oder Signalverbindung 57 zum Austausch von Informationen vorgesehen sein. Sie kann beispielsweise für einen fortwährenden Kreuzvergleich der unabhängig festgestellten Betätigungs- oder Signalzustände beziehungsweise der intern in den Bausteinen festgestellten bzw. gespeicherten Sicherheitszustände verwendet werden.

Über die zusätzliche Datenschnittstelle 47 kann zumindest einer der beiden Prozessoren der Datenübertragungsgegenstelle 9 Daten mit der Steuerung 10 austauschen, welche auch nicht sicherheitskritische Steuerkommandos und Visualisierungsfunktionen und -daten betreffen und welche von der Datenübertragungsgegenstelle 9 selbst nicht speziell ausgewertet oder inhaltlich verarbeitet, sondern nur zwischen mobiler Bedienvorrichtung 2 und Steuerung 10 weitergeleitet werden. Damit kann die sichere Punkt-zu-Punkt Verbindung zwischen mobiler Bedienvorrichtung 2 und Datenübertragungsgegenstelle 9 auch für diese Daten genutzt werden. Es kann dadurch vor allem auch von der Datenübertragungsgegenstelle 9 die Abgabe von Steuerkommandos von der Bedienvorrichtung 2 an die Steuerung 10 zuverlässig verhindert werden, bis die Datenverbindung vollständig hergestellt ist und die Betätigungszustände der Sicherheitsschaltelemente mit den gespeicherten Zuständen synchronisiert sind und die Ankopplung an den Sicherheitskreis freigeschaltet ist. Vorzugsweise wird die Datenverbindung 19 zwischen Datenübertragungsgegenstelle 9 und Steuerung 10 als eindeutige Punkt-zu-Punkt Verbindung ohne irgendwelche weiteren Teilnehmer oder mit fest eingerichteter protokollarischer Absicherung der Punkt-zu-Punkt Zuordnung eingerichtet.

Weitere übliche Komponenten wie beispielsweise Netzteil und Stromanschluss oder etwa auch Watchdog-Timer für die Prozessoren sind aus Gründen der besseren Übersichtlichkeit in der Fig. 3 nicht dargestellt. Diese sind dem Fachmann hinsichtlich ihrer Ausgestaltung, Einbindung und Wirkung hinlänglich bekannt.

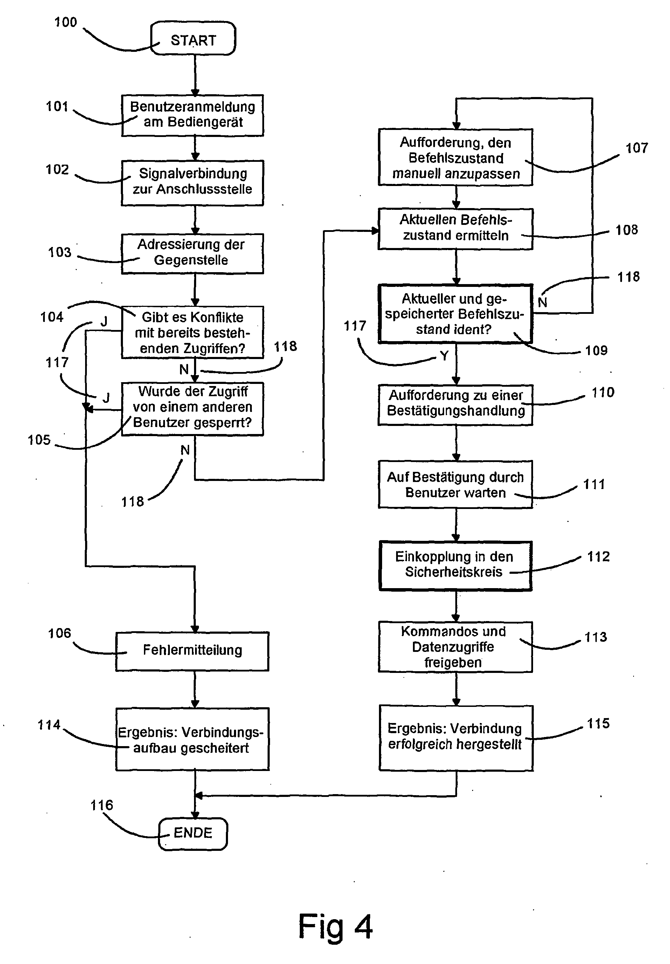

Fig. 4 zeigt ein Beispiel für den Ablauf eines erfindungsgemäßen Verfahrens zum sicheren Herstellen einer datentechnischen Wirkverbindung zwischen einer mobilen Bedien- und Beobachtungsvorrichtung mit integrierten Sicherheitsschaltelementen und einer sicheren Datenübertragungsgegenstelle bzw. einer steuerbaren technischen Einrichtung. Der Ablauf ist dabei keinesfalls vollständig dargestellt, sondern gibt zumindest erfindungswesentliche sowie einige vorteilhafte Teile überblicksartig wieder.

Am Beginn 100 der Anmeldeprozedur nimmt eine Bedienperson 1 eine mobile Bedien- und Beobachtungsvorrichtung 2 in Betrieb. Es wird in dieser Darstellung davon ausgegangen, dass es sich um ein drahtlos datengekoppeltes Handbediengerät mit einem autonomen integrierten Energiespeicher handelt, so dass dieses auch olme bestehende Verbindung zu einer Anschlussstelle 3 zumindest elektrisch in Betrieb genommen werden kann.

Vergleichbar zu bekannten Personal Computern muss sich die Bedienperson am Handbediengerät anmelden (Phase 101) und sich als Benutzer durch Angabe eines registrierten Benutzernamens und üblicherweise eines Passwortes identifizieren.

Nun wird eine Datenverbindung zwischen dem Handbediengerät 2 und einer sicheren Datenübertragungsgegenstelle 9 bzw. einer Anschlussstelle, welche der gewünschten steuerbaren technischen Einrichtung zugeordnet ist, aufgebaut (Phase 102). Beinhaltet die verwendete Datenstrecke auch Übertragungsmedien, welche keine physikalisch eindeutige Punkt-zu-Punkt Verbindung realisieren, wie beispielsweise Funknetze oder auch kabelgebundene Netzwerke und Busstrukturen, so sind dabei zusätzliche Adressinformationen zu verwenden (Phase 103), welche die gewünschte Maschine oder den gewünschten Anlagenteil eindeutig identifizieren und eine eindeutige Zustellung versendeter Datentelegramme ermöglichen. Erfolgt die Verbindung vollständig leitungsgebunden mit eindeutigen Punkt-zu-Punkt Verbindungen, so kann eine Adressierung natürlich auch entfallen. Die Zuordnung des mobilen Bediengerätes zu einer steuerbaren technischen Einrichtung erfolgt dann ausschließlich durch die Auswahl der Anschlussstelle.

Ist physikalisch eine gleichzeitige Datenverbindung von mehreren mobilen Bedienvorrichtungen mit der selben steuerbaren technischen Einrichtung möglich, so ist durch eine entsprechende Überprüfung (Phase 104) und durch eine datenprotokollarische Absicherung eine bereits zuvor bestehende Datenverbindung zu erfassen und der Aufbau weiterer Datenverbindungen zu unterbinden, so dass es keinesfalls zu konkurrierenden Zuständen kommen kann, in welchen mehrere Personen unabsichtlich oder fahrlässig die selbe technische Einrichtung bedienen und sich dabei gegenseitig gefährden oder zumindest behindern können.

In der Phase 105 wird anschließend überprüft, ob die Maschine während einer zuvor bestandenen Wirkverbindung zu einer Bedienvorrichtung 2 von einem Benutzer gesperrt wurde. In dieser Phase 105 kann auch eine Eingabe eines speziellen Passwortes durch den Benutzer zur Aufhebung einer bestehenden Sperre vorgesehen sein, welche nicht extra dargestellt ist. Eine Berechtigung zum Entsperren kann aber auch allein aus den Logon-Daten des Benutzers ableitbar sein.

In Fig. 4 nicht dargestellt, jedoch in manchen Fällen vorteilhaft oder sogar notwendig, ist die Überprüfung von benutzerspezifischen Berechtigungen für den Zugriff auf bestimmte Maschinen oder Anlagenteile. Dadurch können Zugriffe auf bestimmte Anlagenteile oder bestimmte Funktionen auf besondere Benutzergruppen eingeschränkt werden.

Falls die Wirkverbindung zwischen der Bedienvorrichtung 2 und der sicheren Datenübertragungsgegenstelle 9 bzw. dem zugeordneten Sicherheitskreis 16 wegen einer bereits vorher bestehenden Verbindung mit einer anderen Bedienvorrichtung oder wegen fehlender Zugriffsberechtigungen des Benutzers nicht möglich ist, wird dies in der Phase 106 dem Benutzer, vorzugsweise unter Angabe des genauen Grundes, mitgeteilt. Der Verbindungsaufbau wird verweigert (Phase 114) und der Anmeldevorgang abgebrochen bzw. beendet (Phase 116).

Besteht zufolge der vorangegangenen Überprüfungen kein Hinderungsgrund für die Herstellung der Wirkverbindung, so wird nun in der Phase 108 der aktuelle Betätigungs- bzw. Schaltzustand der Sicherheitsschaltelemente 38, 39, 70 der Bedienvorrichtung 2 erfasst und zur sicheren Datenübertragungsgegenstelle 9 übertragen.

Anschließend wird in Phase 109 erfindungsgemäß der jeweils ermittelte Schaltzustand mit dem korrespondierenden gespeicherten Zustand verglichen, welcher zu diesem Zeitpunkt von der sicheren Datenübertragungsgegenstelle 9 noch in den Sicherheitskreis 16 eingespeist wird. Falls bei diesem Vergleich eine Abweichung festgestellt wird, unterbleibt die Herstellung der Wirkverbindung vorerst und erfolgt in Phase 107 eine Mitteilung an die Bedienperson über das Vorliegen einer solchen Abweichung. Weiters erfolgt eine Aufforderung an den Benutzer zur manuellen Angleichung des Betätigungs- bzw. Befehlszustandes der Sicherheitsschaltelemente 38, 39, 70 an den gespeicherten Zustand. Die Abfrage der Schaltzustände sowie der Vergleich werden zyklisch fortgesetzt, bis beim Vergleich eine Übereinstimmung der Schaltzustände aller relevanten Sicherheitsschaltelemente mit den korrespondierenden, gespeicherten Schaltzuständen festgestellt wird, oder das Anmeldeverfahren aus anderen Gründen abgebrochen wird.

Nachdem die Schaltzustände der relevanten Sicherheitsschaltelemente 38, 39, 70 mit den gespeicherten Zuständen übereinstimmen, wird der Benutzer in Phase 110 aufgefordert, die Herstellung der Wirkverbindung durch eine bewusste Bedienhandlung zu bestätigen. In Phase 111 wird dann auf diese Bedienhandlung gewartet. Eine solche Bestätigung muss nicht zwingend im Ablauf vorgesehen sein. Sie kennzeichnet und trennt jedoch für den Benutzer klar die Phase der Überprüfung aller Vonraussetzungen für die Herstellung der Verbindung gegenüber der Phase der Ausübung der Befehlsgewalt über die Maschine.

Unmittelbar nach der Bestätigung der Bedienperson in Phase 111 wird in Phase 112 mit der fortlaufenden Übernahme der aktuellen Schaltzustände der Sicherheitsschaltelemente 38, 39, 70 in den Sicherheitskreis 16 und in die korrespondierenden Speicher der sicheren Datenübertragungsgegenstelle 9 begonnen. Gleichzeitig oder unmittelbar danach werden auch die restlichen Steuerbefehle von der Bedienvorrichtung 2 an die funktionale Steuerung 10 freigeschaltet bzw. fortlaufend weitergeleitet.

Damit ist die Wirkverbindung zwischen der mobilen Bedienvorrichtung 2 und der steuerbaren technischen Einrichtung sicherheitstechnisch und datentechnisch vollständig hergestellt. Das Anmeldeverfahren ist damit erfolgreich abgeschlossen (Phase 115, 116)

Dem Fachmann ist unmittelbar klar, in welcher Weise bei der Durchführung des Verfahrens nach Fig. 4 die einzelnen Komponenten, insbesondere die mobile Bedienvorrichtung 2 und die Datenübertragungsgegenstelle 9 zusammenwirken und wo die entsprechenden Funktionen, Abfragen und Ausgaben implementierbar sind bzw. wo diese unter Berücksichtung der gesamten Systemarchitektur vorzugsweise zu implementieren sind.

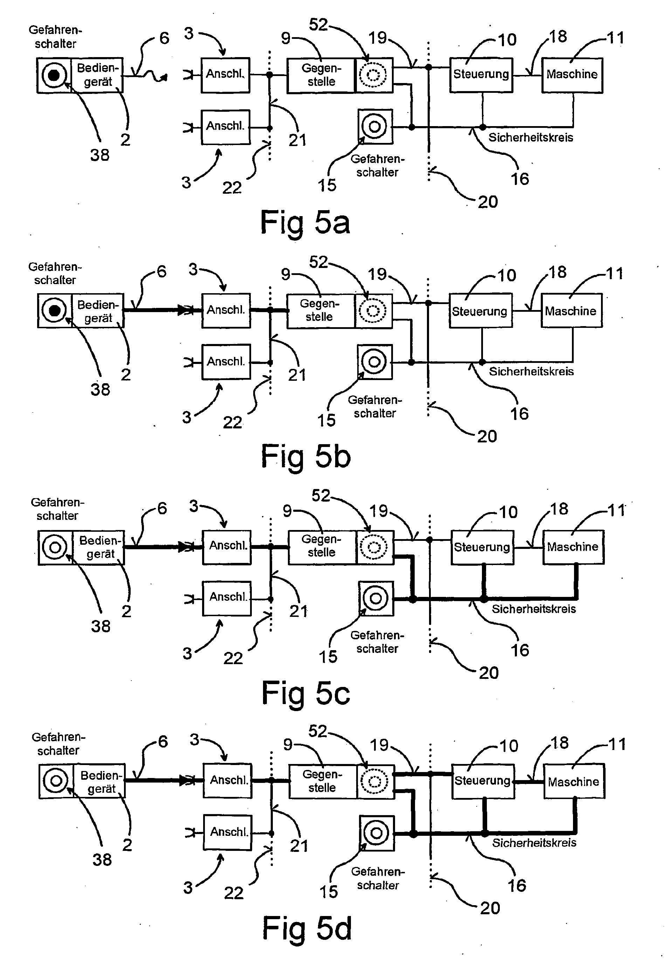

Die Fig. 5a bis 5d zeigen beispielhaft ein System mit den wesentlichen Komponenten einer steuerbaren technischen Einrichtung, mit einer erfmdungsgemäßen sicheren Datenübertragungsgegenstelle 9 und einer zur zeitweiligen datentechnischen Ankopplung einer zur Abgabe von Steuerkommandos vorgesehenen mobilen Bedienvorrichtung 2, welche mit zumindest einem Sicherheitsschaltelement in der Art eines Not-Aus Schalters 38 ausgestattet ist. Weiters sind die Signal- und Datenverbindungen zwischen den Komponenten symbolisch dargestellt. Dabei zeigen die Figuren 5a bis 5d die unterschiedlichen Phasen bei der Herstellung der zeitweiligen signal- bzw. datentechnischen Wirkverbindung zwischen der mobilen Bedienvorrichtung 2 und der Steuerung 10 bzw. der gesteuerten Maschine 11. Die in der jeweiligen Phase aktiven, d.h. mit der Bedienvorrichtung 2 gekoppelten Signal- und Datenpfade sind in den Darstellungen entsprechend verstärkt hervorgehoben. Die sichere Datenübertragungsgegenstelle 9 ist permanent in den Sicherheitskreis 16 eingebunden, ebenso wie ein fest an der Anlage installierter Not-Aus bzw. Gefahrenschalter 15. Der von der Datenübertragungsgegenstelle 9 in den Sicherheitskreis 16 eingekoppelte Not-Aus Befehlszustand ist symbolisch als strichliert dargestellter Not-Aus bzw. Gefahrenschalter 52 als ein integrierter Teil der Datenübertragungsgegenstelle 9 dargestellt. Der Sicherheitskreis 16 wird zur funktionalen Steuerung 10 und auch zur Maschine 11, bzw. in der Praxis meist zu den Antrieben, Umrichtern, oder allgemein zu den Energieumwandlern der Maschine 11, geführt. Dadurch kann die Maschine 11 durch einen unmittelbar eingekoppelten Not-Aus Befehl, entweder durch den fest installierten Not-Aus bzw. Gefahrenschalter 15 oder durch die Schnittstelle 52 der sicheren Datenübertragungsgegenstelle 9 zuverlässig in den sicheren Stopp-Zustand versetzt werden. Zur Ankopplung der Bedieneinheit 2 sind zwei wahlweise verwendbare Anschaltstellen 3 dargestellt. Weitere solcher Stellen bzw. ein ganzes Netzwerk 22 solcher Stellen kann vorgesehen sein, wobei dann auch eine Mehrzahl von sicheren Datenübertragungsstellen 9 für unterschiedliche Maschinen 11 oder unterschiedliche Anlagenteile vorgesehen sein können. Die Zuordnung einer Anschaltstelle 3 zu einer sicheren Datenübertragungsgegenstelle 9 erfolgt in einem solchen Netzwerk 22 üblicherweise durch Vergabe und Verknüpfung logischer Adressen. Eine Datenverbindung 19 zwischen der sicheren Datenübertragungsgegenstelle 9 und der funktionalen Steuerung 10 dient der Übertragung der nicht sicherheitsbezogenen Daten, wie beispielsweise allgemeinen Steuerkommandos und Betriebsdaten für die Visualisierung. Auch hier ist eine Vernetzung 20 mit weiteren Steuerungen anderer Maschinen, Anlagenteile, mit Leitständen, zentralen Servern oder dergleichen möglich und üblich. Die Einbindung mehrerer Datenübertragungsgegenstellen 9 in einen einzigen Sicherheitskreis 16 ist, obwohl nicht extra dargestellt, prinzipiell ebenfalls möglich und beispielsweise dann sinnvoll, wenn mehrere einzeln und unabhängig steuerbare bzw. bedienbare Teile einer größeren Fertigungsanlage zu einem gemeinsamen Sicherheitskreis gehören und in einer Gefahrensituation gemeinsam stillgesetzt werden sollen.

Figur 5a zeigt die Phase A noch vor dem eigentlichen Herstellen einer Signal- oder Datenverbindung zwischen der Bedieneinheit 2 und der steuerbaren Einrichtung. Die Bedieneinheit 2 ist dabei noch nicht mit einer der vorgesehenen Anschlussstellen 3 verbunden und dem entsprechend ist auch noch kein Teil der steuerbaren technischen Einrichtung durch die Bedienvorrichtung 2 datentechnisch beeinflussbar. Die mobile Bedienvorrichtung 2 kann zu diesem Zeitpunkt ausgeschaltet oder bei Vorhandensein eines integrierten autonomen Energiespeichers auch bereits eingeschaltet sein. Insbesondere kann sich auch bereits ein Benutzer durch Eingabe einer Benutzerkennung und eines Passwortes als autorisierter Benutzer identifiziert haben. In der Figur 5a ist der Not-Aus bzw. Gefahrenschalter 38 der Bedienvorrichtung 2 als betätigt dargestellt und durch ein ausgefüllt dargestelltes Betätigungselement gekennzeichnet. Der fest installierte Not-Aus bzw. Gefahrenschalter 15 sowie der von der Datenübertragungsgegenstelle 9 in den Sicherheitskreis 16 eingespeiste Signalzustand entspricht jeweils einem nicht betätigten Not-Aus Zustand, so dass die Anlage betriebsbereit ist.

Die Figur 5b zeigt die Phase B, in der über eine Anschaltstelle 3 bereits eine Daten- bzw. Signalverbindung zwischen der mobilen Bedieneinheit 2 und der sicheren Datenübertragungsgegenstelle 9 besteht. In dieser Phase prüft die Datenübertragungsgegenstelle 9, ob die Herstellung der Verbindung ohne Konflikt mit einer etwaig zuvor bestehenden Verbindung zu einer anderen Bedieneinrichtung möglich ist, ob der Zugang zuvor gesperrt wurde bzw. ob der Benutzer eine ausreichende Berechtigung zur Herstellung einer Verbindung besitzt. Als wesentlicher erfindungsgemäßer Verfahrensschritt erfolgt weiters ein Vergleich zwischen dem Betätigungs- bzw. Schaltzustand des Not-Aus Schalters 38 an der Bedienvorrichtung 2 mit dem bisher von der Datenübertragungseinrichtung 9 gemeldeten bzw. über die Schnittstelle 52 eingespeisten Not-Aus Signalzustand. Im dargestellten Beispiel sind diese Zustände unterschiedlich. Der Schaltzustand des Not-Aus Schalters 38 wird daher zunächst noch nicht von der Datenübertragungsgegenstelle 9 an den Sicherheitskreis 16 weitergeleitet. Es erfolgt ein informeller Hinweis bzw. eine Aufforderung an den Benutzer, vorzugsweise über Ausgabemittel an der Bedienvorrichtung 2, den Schaltzustand des Sicherheitsschaltelementes 38 manuell anzupassen.

Sobald in der Datenübertragungsgegenstelle 9 festgestellt wird, dass der Betätigungs- bzw. Schaltzustand des Not-Aus Schalters 38 mit dem bisher an der Schnittstelle 52 eingekoppelten Zustand übereinstimmt, wird in einer Phase C der Zustand des Not-Aus Schalters 38 mit allen nachfolgenden Änderungen unmittelbar über die Schnittstelle 52 in den Sicherheitskreis 16 eingekoppelt, also die Wirkverbindung zwischen dem Sicherheitsschaltelement 38 der Bedienvorrichtung 2 und dem Sicherheitskreis 16 hergestellt.

Entsprechend der Darstellung in Fig. 5d wird unmittelbar danach bzw. auch gleichzeitig die Datenkommunikation zur funktionalen Steuerung 10 freigeschaltet bzw. werden die Steuerkommandos von der Bedienvorrichtung 2 an die Steuerung 10 freigeschaltet und wird damit die Herstellung der Wirkverbindung vervollständigt. Die mobile Bedienvorrichtung 2 ist nun voll wirksam mit dem Sicherheitskreis 16 und der funktionalen Steuerung 10 verbunden.

### Bezugszeichenaufstellung

- 1: Benutzer, Bedienperson
- 2: mobile Bedienvorrichtung, Handbe- diengerät
- 3: Funkgegenstelle oder Anschlussstelle
- 6: Funkverbindung oder Anschlusskabel für Nutzdaten
- 9: sichere Datenübertragungsgegenstelle
- 10: Steuerung, funktionale Steuerung

- 11: Maschine, Roboter, Manipulator
- 12: Werkstück
- 13: Transportmittel
- 14: Sicherheitszone
- 15: festverdrahtetes Not-Aus Sicherheits- schaltelement

- 16: festverdrahteter Sicherheitskreis
- 17: Transportrichtung Werkstück
- 18: Steuer- und Sensorsignale
- 19: Steuerungsdatenleitung
- 20: Steuerungsdatennetzwerk

- 21: Funk-/Anschlussstellen Datenleitung
- 22: Funk-/Anschlussstellen Datennetz- werk
- 23: Nutzdaten Funkschnittstelle, Funk- modul
- 25: Spannungsversorgung, Akku

- 26: Ausgabemittel, Display
- 27: Eingabemittel, Touchscreen
- 28: Eingabemittel, Tasten, Tastenfeld, Schaltelemente
- 29: Eingabemittel, Joystick
- 30: Eingabemittel, Handrad, Potentiometer

- 31: Schnittstelle für optionales Erweite- rungsmodul oder optionale Daten- schnittstelle
- 32: optionale Datenverbindung
- 33: Prozessor, CPU, Erfassungsschalt- kreis
- 34: erster Prozessor oder Erfassungs- schaltkreis

- 35: zweiter Prozessor oder Erfassungs- schaltkreis
- 36: Arbeitsspeicher
- 37: On chip Arbeitsspeicher
- 38: Not-Aus bzw. Gefahrenschalter, mehr- kreisiges Sicherheitsschaltelement
- 39: Zustimmtaster, mehrkreisiges Sicher- heitsschaltelement
- 40: Datenleitung

- 41: Datenleitung
- 42: Datenleitung
- 43: Datenleitung, Peripheriebus
- 44: Signalleitungen
- 45: nichtflüchtiger Speicher

- 46: Datenschnittstelle zur Funkgegenstelle
- 47: Datenschnittstelle zur Steuerung
- 48: dritter Prozessor oder Überwachungs- schaltkreis
- 49: vierter Prozessor oder Überwachungs- schaltkreis
- 50: Arbeitsspeicher

- 51: On chip Arbeitsspeicher
- 52: Not-Aus Schnittstelle
- 53: Zustimmtaster Schnittstelle
- 54: Not-Aus Sicherheitskreis
- 55: Zustimmtaster Sicherheitskreis

- 56: Datenverbindung
- 57: Datenverbindung
- 58: Datenverbindung
- 60: industrielles Fertigungssystem, steuer- bare technische Einrichtung, Anlage
- 65: Server, Rechenanlage

- 66: Bearbeitungszelle
- 67: Absperrung
- 70: Betriebsarten-Wahlschalter
- 71: Betriebsartenwahl Schnittstelle
- 72: Betriebsartenwahl Sicherheitskreis
- 100: Beginn des Verfahrens für einen sicheren Verbindungsaufbau
- 101: Logon des Benutzers an der mobilen Bedienvorrichtung
- 102: Herstellen einer daten- oder signal- technischen Verbindung von der mobilen Bedienvorrichtung zu einer Einwahlstelle
- 103: Auswahl der Maschine oder des Anlagenteiles
- 104: Überprüfung, ob die ausgewählte Maschine bereits eine Datenverbin- dung zu einer anderen Bedienvor- richtung unterhält

- 105: Überprüfung, ob der Zugriff auf die Maschinenfunktionen von einem anderen Benutzer gesperrt wurde
- 106: Mitteilung an den Benutzer über den Grund des fehlgeschlagenen Ver- bindungsaufbaus
- 107: Aufforderung an den Benutzer, die Betätigungszustände der Sicher- heitsschaltelemente zu synchronisie- ren
- 108: Erfassen der aktuellen Betätigungs- zustände der Sicherheitsschaltele- mente
- 109: Überprüfung, ob die aktuellen Betä- tigungszustände mit den gespeicher- ten Zuständen übereinstimmen

- 110: Aufforderung an den Benutzer, die Fertigstellung des Verbindungsauf- baus frei zu geben
- 111: Warten auf die Freigabebestätigung des Benutzers
- 112: Freigabe der Sicherheitsschaltele- mente zur Übertragung in den Si- cherheitskreis
- 113: Freigabe der Steuerfunktionen und der Datenübertragung zwischen Be- dienvorrichtung und Steuerung
- 114: Ergebnis eines fehlgeschlagenen Verbindungsaufbaus

- 115: Ergebnis eines erfolgreichen Ver- bindungsaufbaus
- 116: Ende des Verfahrens für einen si- cheren Verbindungsaufbau
- 117: das Ergebnis der Überprüfung lautet JA oder WAHR
- 118: das Ergebnis der Überprüfung lautet NEIN oder FALSCH

## Patentansprüche

1. Verfahren zum Herstellen einer zeitweiligen datentechnischen und/oder signaltechnischen Wirkverbindung zwischen einer mobilen Bedienvorrichtung (2) und einer steuerbaren technischen Einrichtung (60) unter Zwischenschaltung einer sicheren Datenübertragungsgegenstelle (9), wobei die mobile Bedienvorrichtung (2) zumindest ein Sicherheitsschaltelement (38, 39, 70) mit mehr als einem stabilen Schalt- oder Befehlszustand, insbesondere in der Art eines Not-Aus Schalters (38), eines Stopp- oder Gefahrenschalters oder eines Betriebsarten-Wahlschalters (70) aufweist, welches Sicherheitsschaltelement (38, 39, 70) bei vollständig hergestellter Wirkverbindung funktional in einen Sicherheitskreis (16) der steuerbaren technischen Einrichtung (60) eingekoppelt ist, wobei die Datenübertragungsgegenstelle (9) datentechnisch und/oder signaltechnisch in den Sicherheitskreis (16) der steuerbaren technischen Einrichtung (60) permanent eingebunden ist und dabei mittels geeigneter Schnittstellen (52, 53, 71) und Schaltelemente zumindest zwei unterschiedliche Schaltzustände des Sicherheitsschaltelementes (38, 39, 70) funktional äquivalent in den Sicherheitskreis (16) einspeisen kann, **dadurch gekennzeichnet, dass** nach Herstellung einer daten- und/oder signaltechnischen Wirkverbindung zwischen der mobilen Bedienvorrichtung (2) und der Datenübertragungsgegenstelle (9) und noch vor der funktionalen Einkopplung des Sicherheitsschaltelementes (38, 39, 70) in den Sicherheitskreis (16) ein Vergleich des aktuellen Schalt- oder Befehlszustandes des Sicherheitsschaltelementes (38, 39, 70) der Bedienvorrichtung (2) mit dem aktuell in den Sicherheitskreis (16) eingespeisten Schalt- oder Befehlszustand der Datenübertragungsgegenstelle (9) erfolgt und dass bei einer festgestellten Abweichung zwischen dem aktuellen Schalt- oder Befehlszustand des Sicherheitsschaltelementes (38, 39, 70) und dem von der Datenübertragungsgegenstelle (9) aktuell in den Sicherheitskreis (16) eingespeisten Schalt- oder Befehlszustandes eine Mitteilung über diese Abweichung an die Bedienperson (1) der mobilen Bedienvorrichtung (2) abgesetzt wird oder dass an die Bedienperson (1) eine Aufforderung abgesetzt wird, für das Sicherheitsschaltelement (38, 39, 70) an der Bedienvorrichtung (2) einen bestimmten Befehls- beziehungsweise Schaltzustand herzustellen.

2. Verfahren nach Anspruch 1, **dadurch gekennzeichnet, dass** an die Bedienperson (1) eine Aufforderung abgesetzt wird, die beabsichtigte funktionale Einkopplung des Sicherheitsschaltelementes (38, 39, 70) in den Sicherheitskreis (16) durch eine bestimmte, bewusste Bedienhandlung zu bestätigen.

3. Verfahren nach Anspruch 1, **dadurch gekennzeichnet, dass** erst nach Registrierung einer bewussten Bedienhandlung durch die Bedienperson (1) die funktionale Einkopplung des Sicherheitsschaltelementes (38, 39, 70) in den Sicherheitskreis (16) erfolgt und erst anschließend die weitere fortlaufende Nachführung des von der Datenübertragungsgegenstelle (9) in den Sicherheitskreis (16) eingespeisten Signales anhand des tatsächlichen Schaltzustandes beziehungsweise des Befehlszustandes des Sicherheitsschaltelementes (38, 39, 70) erfolgt.

4. Verfahren nach Anspruch 3, **dadurch gekennzeichnet, dass** die bewusste Bedienhandlung die Betätigung eines Sicherheitsschaltelementes (38, 39, 70) der mobilen Bedienvorrichtung (2) ist.

5. Verfahren nach Anspruch 4, **dadurch gekennzeichnet, dass** die bewusste Bedienhandlung darin besteht, den Befehlszustand des Sicherheitsschaltelementes (38, 39, 70) von einem ersten Befehlszustand, welcher abweichend zum eingekoppelten Befehlszustand des Sicherheitskreises (16) ist, in einen zweiten Befehlszustand, welcher mit dem eingekoppelten Befehlszustand des Sicherheitskreises (16) übereinstimmt, zu überführen.

6. Verfahren nach einem der Ansprüche 1 bis 5, **dadurch gekennzeichnet, dass** erst nach Registrierung einer Übereinstimmung zwischen dem Befehlszustand des Sicherheitsschaltelementes (38, 39, 70) der Bedienvorrichtung (2) und dem von der Datenübertragungsgegenstelle (9) in den Sicherheitskreis (16) eingespeisten Befehlszustandes die funktionale Einkopplung des Sicherheitsschaltelementes (38, 39, 70) erfolgt und erst anschließend die weitere fortlaufende Nachführung des von der Datenübertragungsgegenstelle (9) in den Sicherheitskreis (16) eingespeisten Signales anhand des tatsächlichen Befehlszustandes des Sicherheitsschaltelementes (38, 39, 70) erfolgt.

7. Verfahren nach einem der Ansprüche 1 bis 6, **dadurch gekennzeichnet, dass** geprüft wird, ob die steuerbare technische Einrichtung (60) beziehungsweise der von der Datenübertragungsgegenstelle (9) in den Sicherheitskreis (16) eingespeiste Befehlszustand gegen eine Änderung durch unbefugte Personen gesperrt ist.

8. Verfahren nach Anspruch 7, **dadurch gekennzeichnet, dass** nur dann, wenn keine Sperre vorliegt, die funktionale Einkopplung des Sicherheitsschaltelementes (38, 39, 70) erfolgt und die weitere fortlaufende Nachführung des von der Datenübertragungsgegenstelle (9) in den Sicherheitskreis (16) eingespeisten Signales anhand des tatsächlichen Befehlszustandes des Sicherheitsschaltelementes (38, 39, 70) erfolgt.

9. Verfahren nach Anspruch 7 oder 8, **dadurch gekennzeichnet, dass** beim Vorliegen einer Sperre gegen unbefugte Änderung dem Benutzer der mobilen Bedienvorrichtung (2) eine Mitteilung mit Angaben betreffend diese Sperre gegeben wird, welche Angaben insbesondere Angaben über die Person, welche die Sperre veranlasst hat, den Zeitpunkt der Veranlassung, die voraussichtliche Dauer, oder den Grund der Sperre umfassen.

10. Verfahren nach einem der Ansprüche 7 bis 9, **dadurch gekennzeichnet, dass** die Sperre nur nach Eingabe und positiver Überprüfung einer Benutzerkennung und/oder eines Passwortes aufgehoben wird.

11. Verfahren nach einem der Ansprüche 1 bis 10, **dadurch gekennzeichnet, dass** die Steuerkommandos der Bedienvorrichtung (2) erst dann vollständig freigeschaltet beziehungsweise an die funktionale Steuerung (10) der steuerbaren technischen Einrichtung (60) weitergeleitet werden, wenn das Sicherheitsschaltelement (38, 39, 70) funktional vollständig in den Sicherheitskreis (16) eingekoppelt ist.

12. Verfahren nach einem der Ansprüche 1 bis 11, **dadurch gekennzeichnet, dass** vor dem Einkoppeln des Sicherheitsschaltelementes (38, 39, 70) in den Sicherheitskreis (16) und/ oder vor dem Durchschalten irgendwelcher Daten und/oder Steuerbefehle von der Bedienvorrichtung (2) an die funktionale Steuerung (10) der steuerbaren technischen Einrichtung (60) eine Überprüfung erfolgt, ob durch die Herstellung der Verbindung ungewollte und potenziell sicherheitskritische, konkurrierende Zustände mit einer anderen bereits zuvor wirkverbundenen Bedienvorrichtung (2) entstehen, und dass in einem solchen Fall der vollständige Aufbau der Wirkverbindung mit der weiteren Bedienvorrichtung (2) verhindert wird.

13. Verfahren zum Aufheben einer zeitweiligen datentechnischen und/oder signaltechnischen Wirkverbindung zwischen einer mobilen Bedienvorrichtung (2) und einer steuerbaren technischen Einrichtung (60) unter Zwischenschaltung einer sicheren Datenübertragungsgegenstelle (9), wobei die mobile Bedienvorrichtung (2) zumindest ein Sicherheitsschaltelement (38, 39, 70) mit mehr als einem stabilen Schalt- oder Befehlszustand, insbesondere in der Art eines Not-Aus Schalters (38), eines Stopp- oder Gefahrenschalters oder eines Betriebsarten-Wahlschalters (70) aufweist, welches Sicherheitsschaltelement (38, 39, 70) bei vollständig hergestellter Wirkverbindung funktional in einen Sicherheitskreis (16) der steuerbaren technischen Einrichtung (60) eingekoppelt ist und wobei die Datenübertragungsgegenstelle (9) datentechnisch und/oder signaltechnisch in den Sicherheitskreis (16) der steuerbaren technischen Einrichtung (60) permanent eingebunden ist und mittels geeigneter Schnittstellen (52, 53, 71) und Schaltelemente die Befehlszustände des Sicherheitsschaltelementes (38, 39, 70) funktional äquivalent in den Sicherheitskreis (16) einspeisen kann, **dadurch gekennzeichnet, dass** der vor der Aufhebung der Wirkverbindung zuletzt als gültig erfasste Befehlszustand des Sicherheitsschaltelementes (38, 39, 70) gespeichert und nach der Aufhebung der Wirkverbindung weiterhin funktional äquivalent von der Datenübertragungsgegenstelle (9) in den Sicherheitskreis (16) eingespeist wird und dass zusätzlich zum zuletzt gültig erfassten Befehlszustand des Sicherheitsschaltelementes (38, 39, 70) auch eine Kennung des Benutzers der zuletzt wirkverbundenen Bedienvorrichtung (2) erfasst und gespeichert wird sowie gegebenenfalls weitere Informationen, insbesondere über den Zeitpunkt der letzten Änderung des Befehlszustandes oder der Aufhebung der Wirkverbindung, erfasst und gespeichert werden.

14. Verfahren nach Anspruch 13, **dadurch gekennzeichnet, dass** der Benutzer der Bedienvorrichtung (2) beim Aufheben der Wirkverbindung angibt, ob die in der Datenübertragungsgegenstelle (9) gespeicherten Befehlszustände gegen unbefugte Änderungen gesperrt werden sollen.

15. Verfahren nach Anspruch 14, **dadurch gekennzeichnet, dass** der Benutzer zusammen mit der Angabe oder Anweisung zum Sperren der Betriebs- oder Befehlszustände auch eine Benutzerkennung und/oder ein Passwort angibt.

16. Sichere Datenübertragungsgegenstelle (9) mit zumindest einer ersten Schnittstelle zur zeitweiligen Herstellung einer daten- und/oder signaltechnischen Wirkverbindung mit einer mobilen Bedienvorrichtung (2), welche Bedienvorrichtung (2) zumindest ein Sicherheitsschaltelement (38, 39, 70) aufweist, sowie mit zumindest einer zweiten Schnittstelle (52, 53, 71) zur permanenten daten- und/oder signaltechnischen Einbindung der Datenübertragungsgegenstelle (9) in den Sicherheitskreis (16) einer steuerbaren technischen Einrichtung (60), **dadurch gekennzeichnet, dass** die Datenübertragungsgegenstelle (9) Speichemittel (45, 50, 51) aufweist, in welchen der zuletzt gültig erfasste Befehlszustand des zumindest einen Sicherheitsschaltelementes (38, 39, 70) einer wirkverbundenen Bedienvorrichtung (2) auch nach Abbruch dieser Wirkverbindung gespeichert ist und dass digitale Datenverarbeitungsmittel (48, 49), insbesondere in der Art von Prozessoren oder programmierbaren Logikbausteinen vorgesehen sind, welche die Signale und Datenflüsse über die Schnittstellen (46, 47, 52, 53, 71) der Datenübertragungsgegenstelle (9) steuern und Vergleiche und Überprüfungen derart durchrühren, dass nach Herstellung einer daten- und/oder signaltechnischen Wirkverbindung zwischen der mobilen Bedienvorrichtung (2) und der Datenübertragungsgegenstelle (9) und noch vor der funktionalen Einkopplung des Sicherheitsschaltelementes (38, 39, 70) in den Sicherheitskreis (16) ein Vergleich des aktuellen Schalt- oder Befehlszustandes des Sicherheitsschaltelementes (38, 39, 70) der Bedienvorrichtung (2) mit dem aktuell in den Sicherheitskreis (16) eingespeisten Schalt- oder Befehlszustand der Datenübertragungsgegenstelle (9) erfolgt und dass bei einer festgestellten Abweichung zwischen dem aktuellen Schalt- oder Befehlszustand des Sicherheitsschaltelementes (38, 39, 70) und dem von der Datenübertragungsgegenstelle (9) aktuell in den Sicherheitskreis (16) eingespeisten Schalt- oder Befehlszustandes eine Mitteilung über diese Abweichung an die Bedienperson (1) der mobilen Bedienvorrichtung (2) abgesetzt wird oder dass an die Bedienperson (1) eine Aufforderung abgesetzt wird, für das Sicherheitsschaltelement (38, 39, 70) an der Bedienvorrichtung (2) einen bestimmten Befehls- beziehungsweise Schaltzustand herzustellen.

17. Sichere Datenübertragungsgegenstelle nach Anspruch 16, **dadurch gekennzeichnet, dass** die Speichermittel (45) zum Speichern des Befehlszustandes des Sicherheitsschaltelementes (38, 39, 70) nichtflüchtig ausgebildet sind, sodass der Schaltzustand auch nach einem Ausfall der Energieversorgung erhalten bleibt.

18. Sichere Datenübertragungsgegenstelle nach Anspruch 16 oder 17, **dadurch gekennzeichnet, dass** die zumindest eine zweite Schnittstelle (52, 53, 71) zur funktional äquivalenten Einkopplung des gespeicherten Befehlszustandes des zumindest einen Sicherheitsschaltelementes (38, 39, 70) ausgebildet ist.

19. Sichere Datenübertragungsgegenstelle nach einem der Ansprüche 16 bis 18, **dadurch gekennzeichnet, dass** die zumindest eine erste Schnittstelle für die Herstellung einer signal-und/oder datentechnischen Wirkverbindung mit zumindest einer mobilen Bedienvorrichtung (2) unter Zwischenschaltung eines Kommunikationsnetzwerkes (21) ausgebildet ist, an welches eine Mehrzahl von Kommunikationsteilnehmern, insbesondere eine Mehrzahl von mobilen Bedienvorrichtungen (2) und/oder eine Mehrzahl von sicheren Datenübertragungsgegenstellen (9) angekoppelt ist.

20. Sichere Datenübertragungsgegenstelle nach einem der Ansprüche 16 bis 19, **dadurch gekennzeichnet, dass** die zumindest eine erste Schnittstelle zur Herstellung einer leitungsgebundenen zeitweiligen Datenverbindung mit einer Bedienvorrichtung (2) vorgesehen ist.

21. Sichere Datenübertragungsgegenstelle nach Anspruch 20, **dadurch gekennzeichnet, dass** die zumindest eine erste Schnittstelle hot-plug fähig ausgebildet ist und die Herstellung und/oder Aufhebung der leitenden Verbindung zu einer mobilen Bedienvorrichtung (2) im laufenden Betrieb bei eingeschalteter Bedienvorrichtung (2) und/oder eingeschalteter Datenübertragungsgegenstelle (9) ohne temporäre oder permanente Funktionsbeeinträchtigung ermöglicht ist.

22. Sichere Datenübertragungsgegenstelle nach Anspruch 20 oder 21, **dadurch gekennzeichnet, dass** über die zumindest eine erste Schnittstelle auch die Energieversorgung für eine angeschlossene mobile Bedienvorrichtung (2) erfolgt.

23. Sichere Datenübertragungsgegenstelle nach einem der Ansprüche 16 bis 18, **dadurch gekennzeichnet, dass** die zumindest eine erste Schnittstelle zur Herstellung einer leitungsfreien zeitweiligen Datenverbindung, insbesondere einer Funk- oder Infrarotverbindung, ausgebildet ist.

24. Sichere Datenübertragungsgegenstelle nach einem der Ansprüche 16 bis 23, **dadurch gekennzeichnet, dass** die zumindest eine erste Schnittstelle zur Herstellung einer Wirkverbindung mit einer mobilen Bedienvorrichtung (2) unter Zwischenschaltung eines Anschlussterminals (3) oder einer Sende- und Empfangseinrichtung (3) ausgebildet ist.

25. Sichere Datenübertragungsgegenstelle nach Anspruch 24, **dadurch gekennzeichnet, dass** die zumindest eine erste Schnittstelle zum Anschluss einer Mehrzahl von Anschlussterminals (3) oder von Sende- und Empfangseinrichtungen (3) ausgebildet ist, welche die Herstellung einer Wirkverbindung zwischen der mobilen Bedienvorrichtung (2) und der Datenübertragungsgegenstelle (9) von mehreren verschiedenen Stellen aus ermöglichen.

26. Sichere Datenübertragungsgegenstelle nach Anspruch 16, **dadurch gekennzeichnet, dass** die digitalen Datenverarbeitungsmittel (48, 49) unabhängig mehrkreisig, insbesondere zweikreisig ausgestaltet sind.

27. Sichere Datenübertragungsgegenstelle nach Anspruch 26, **dadurch gekennzeichnet, dass** die digitalen Datenverarbeitungsmittel (48, 49) diversitär ausgeführt sind.

28. Sichere Datenübertragungsgegenstelle nach einem der Ansprüche 16 bis 27, **dadurch gekennzeichnet, dass** zumindest eine dritte Schnittstelle (47) zur permanenten datentechnischen Anbindung an die funktionale Steuerung (10) der steuerbaren technischen Einrichtung (60) ausgebildet ist, und dass die Datenübertragungsgegenstelle (9) nicht sicherheitskritische Befehlzustände, Daten und Steuerkommandos als Gateway zwischen einer zeitweilig wirkverbundenen Bedienvorrichtung (2) und der funktionalen Steuerung (10) der steuerbaren technischen Einrichtung (60) überträgt.

29. Sichere Datenübertragungsgegenstelle nach Anspruch 28, **dadurch gekennzeichnet, dass** sie zur Umwandlung des physikalischen oder logischen Datenformates für die zwischen der Bedienvorrichtung (2) und der funktionalen Steuerung (10) übertragenen Daten ausgebildet ist und gegebenenfalls zur Zwischenspeicherung der Daten vorgesehen ist.

30. Sichere Datenübertragungsgegenstelle nach einem der Ansprüche 16 bis 29, **dadurch gekennzeichnet, dass** Mittel zur Bestimmung der aktuellen Zeit ausgebildet sind.

31. Sichere Datenübertragungsgegenstelle nach einem der Ansprüche 16 bis 30, **dadurch gekennzeichnet, dass** die Datenübertragungsgegenstelle (9) mit der funktionalen Steuerung (10) der steuerbaren technischen Einrichtung (60) baulich kombiniert oder in diese integriert ist.

32. Sichere Datenübertragungsgegenstelle nach einem oder mehreren der Ansprüche 16 bis 31, **dadurch gekennzeichnet, dass** die Datenübertragungsgegenstelle (9) mit einem Anschlussterminal oder einer Sende- und Empfangseinrichtung baulich kombiniert ist.

## Claims

1. Method of establishing a temporary active connection for transmitting data and/or signals between a mobile operating device (2) and a controllable technical unit (60) with an interconnected safe data transmission remote station (9), and the mobile operating device (2) has at least one safety switch element (38, 39, 70) with more than one stable switch or command state, in particular in the form of an emergency-off switch (38), a stop or danger switch or an operating mode selection switch (70), which safety switch element (38, 39, 70) is functionally coupled into a safety circuit (16) of the controllable technical unit (60) during a fully established active connection, and the data transmission remote station (9) is permanently connected to the safety circuit (16) of the controllable technical unit (60) to permit a transmission of data and/or signals and can thus feed at least two different switch states of the safety switch element (38, 39, 70) into the safety circuit (16) in a functionally equivalent manner across appropriate interfaces (52, 53, 71) and switch elements, **characterised in that** after establishing an active connection between the mobile operating device (2) and the data transmission remote station (9) to permit a transmission of data and/or signals but before functionally coupling the safety switch element (38, 39, 70) into the safety circuit (16), a comparison is run between the current switching or command state of the safety switch element (38, 39; 70) of the operating device(2) and the switch or command state of the data transmission remote station (9) currently being fed into the safety circuit (16), and if it is ascertained that there is a variance between the current switch or command state of the safety switch element (38, 39, 70) and the switch or command state currently being fed from the data transmission remote station (9) into the safety circuit (16), a message pertaining to this variance is sent to the operator (1) of the mobile operating device (2) or the operator (1) is prompted via the operating device (2) to establish a specific command or switch state for the safety switch element (38, 39, 70).

2. Method as claimed in claim 1, **characterised in that** the operator (1) is prompted to confirm the intended functional coupling of the safety switch element (38, 39, 70) into the safety circuit (16) by means of a specific, deliberate operating action.

3. Method as claimed in claim 1, **characterised in that** the safety switch element (38, 39, 70) is not functionally coupled into the safety circuit (16) until a deliberate operating action by the operator (1) has been registered, and it is not until then that the signal fed from the data transmission remote station (9) to the safety circuit (16) is subsequently acted upon on an ongoing basis based on the actual switch state or command state of the safety switch element (38, 39, 70).

4. Method as claimed in claim 3, **characterised in that** the deliberate operating action is the operation of a safety switch element (38, 39, 70) of the mobile operating device (2).

5. Method as claimed in claim 4, **characterised in that** the deliberate operating action involves transferring the command state of the safety switch element (38, 39, 70) from a first command state, which is different from the command state in which the safety circuit (16) is coupled in, to a second command state which matches the command state in which the safety circuit (16) is coupled in.

6. Method a claimed in one of claims 1 to 5, **characterised in that** the safety switch element (38, 39, 70) of the operating device is not functionally coupled in until a match has been registered between the command state of the safety switch element (38, 39, 70) of the operating device (2) and the command state being fed from the data transmission remote station (9) to the safety circuit (16), and it is not until then that the signal fed from the data transmission remote station (9) to the safety circuit (16) is acted upon subsequently on an ongoing basis based on the actual command state of the safety switch element (38, 39,70).

7. Method as claimed in one of claims 1 to 6, **characterised in that** a check is run to ascertain whether the controllable technical unit (60) or the command state being fed to the safety circuit (16) from the data transmission remote station (9) has been locked to prevent it from being changed by unauthorised persons.

8. Method as claimed in claim 7, **characterised in that** only if a lock has not been applied is the safety switch element (38, 39, 70) functionally coupled in and the signal fed from the data transmission remote station (9) to the safety circuit (16) subsequently acted upon on an ongoing basis based on the actual command state of the safety switch element (38, 39, 70).

9. Method as claimed in claim 7 or 8, **characterised in that** if a lock has been applied to prevent a change being made, a message is sent to the user of the mobile operating device (2) containing details relating to this lock, these details in particular including details about the person who applied the lock, the time at which it was applied, the foreseeable duration or the reason for the lock.

10. Method as claimed in one of claims 7 to 9, **characterised in that** the lock is not released until a user code and/or a password has been entered and positively checked.

11. Method as claimed in one of claims 1 to 10, **characterised in that** the control commands of the operating device (2) are not fully released or forwarded to the functional controller (10) of the controllable technical unit (60) unless the safety switch element (38, 39, 70) has been functionally fully coupled into the safety circuit (16).

12. Method as claimed in one of claims 1 to 11, **characterised in that** before the safety switch element (38, 39, 70) is coupled into the safety circuit (16) and/or before any data and/or control commands are switched from the operating device (2) through to the functional controller (10) of the controllable technical unit (60), a test is run to ascertain whether establishing the connection will cause undesired and potentially safety critical concurrent states with another operating device (2) already actively connected previously and, if such is the case, the full active connection to the other operating device (2) is prevented.

13. Method of disconnecting a temporary active connection permitting a transmission of data or signals between a mobile operating device (2) and a controllable technical unit (60) with an interconnected safe data transmission remote station (9), and the mobile operating device (2) has at least one safety switch element (38, 39, 70) with more than one stable switch or command state, in particular in the form of an emergency-off switch (38), a stop or danger switch or an operating mode selection switch (70), which safety switch element (38, 39, 70) is functionally coupled into a safety circuit (16) of the controllable technical unit (60) during a fully established active connection, and the data transmission remote station (9) is permanently connected to the safety circuit (16) of the controllable technical unit (60) to permit a transmission of data and/or signals and can thus feed at least two different switch states of the safety switch element (38, 39, 70) into the safety circuit (16) in a functionally equivalent manner via appropriate interfaces (52, 53, 71) and switch elements, **characterised in that** the command state of the safety switch element (38, 39, 70) most recently detected as being valid is stored before the active connection is disconnected and, after the active connection has been disconnected, the feed continues from the data transmission remote station (9) to the safety circuit (16) in a functionally equivalent manner, and in addition to the command state of the safety switch element (38, 39, 70) most recently detected as being valid, a code of the user of the last actively connected operating device (2) is also detected and stored and optionally other information, in particular pertaining to the time at which the last change was made to the command state or at which the active connection was disconnected, is detected and stored.

14. Method as claimed in claim 13, **characterised in that**, when disconnecting the active connection, the user of the operating device (2) specifies whether the command states stored in the data transmission remote station (9) should be locked to prevent unauthorised changes.

15. Method as claimed in claim 14, **characterised in that**, together with the specification or instruction to lock the operating or command states, the user also specifies a user code and/or password.

16. Safe data transmission remote station (9) with at least a first interface for temporarily establishing an active connection to a mobile operating device (2) for transmitting data and/or signals, which operating device (2) has at least one safety switch element (38, 39, 70), and at least a second interface (52, 53, 71) for permanently connecting the data transmission remote station (9) to the safety circuit (16) of a controllable technical unit (60) for transmitting data and/or signals, **characterised in that** the data transmission remote station (9) has memory means (45, 50, 51) in which the command state of the at least one safety switch element (38,39,70) of an actively connected operating device (2) most recently detected as being valid is stored even after this active connection has been disconnected, and digital data processing means (48, 49) are provided, in particular in the form of processors or programmable logic modules, which control the signals and data streams across the interfaces (46, 47, 52, 53, 71) of the data transmission remote station (9) and run comparisons and checks so that, once an active connection for transmitting data and/or signals has been established between the mobile operating device (2) and data transmission remote station (9) and, before the safety switch element (38, 39, 70) is coupled into the safety circuit (16), a comparison is run between the current switch or command state of the safety switch element (38, 39, 70) of the operating device (2) and the current switch or command state of the data transmission remote station (9) being fed into the safety circuit (16), and if it is established that there is a variance between the current switch or command state of the safety switch element (38, 39, 70) and the switch or command state currently being fed into the safety circuit (16) from the data transmission remote station (9), a message is about this variance is sent to the operator (1) of the mobile operating device (2) or the operator (1) is prompted to establish a specific command or switch state for the safety switch element (38, 39, 70) from the operating device (2).

17. Safe data transmission remote station as claimed in claim 16, **characterised in that** the memory means (45) for storing the command state of the safety switch element (38, 39, 70) is of the non-volatile type so that the switch state is maintained even after a failure of the power supply.

18. Safe data transmission remote station as claimed in claim 16 or 17, **characterised in that** the at least one second interface (52, 53, 71) is configured to couple in the stored command state of the at least one safety switch element (38, 39, 70) in a functionally equivalent manner.

19. Safe data transmission remote station as claimed in one of claims 16 to 18, **characterised in that** the at least one first interface is configured to establish the active connection for transmitting signals and/or data to at least one mobile operating device (2) via an interconnected communication network (21) to which a plurality of communication parties, in particular a plurality of mobile operating devices (2) and/or a plurality of safe data transmission remote stations (9), are coupled.

20. Safe data transmission remote station as claimed in one of claims 16 to 19, **characterised in that** the at least one first interface is provided as a means of establishing a hard-wired temporary data connection to an operating device (2).

21. Safe data transmission remote station as claimed in claim 20, **characterised in that** the at least one first interface has hotplug capability and enables a hard-wired connection to a mobile operating device (2) to be established and/or disconnected during ongoing operation when the operating device (2) is switched on and/or the data transmission remote station (9) is switched on without temporarily or permanently impairing functional operation.

22. Safe data transmission remote station as claimed in claim 20 or 21, **characterised in that** the power for a connected mobile operating device (2) is also supplied across the at least one first interface.

23. Safe data transmission remote station as claimed in one of claims 16 to 18, **characterised in that** the at least one first interface is configured to establish a wireless temporary data connection, in particular a radio or infrared connection.

24. Safe data transmission remote station as claimed in one of claims 16 to 23, **characterised in that** the at least one first interface is configured to establish an active connection to a mobile operating device (2) via an interconnected terminal (3) or a transmitter and receiver unit (3).

25. Safe data transmission remote station as claimed in claim 24, **characterised in that** the at least one first interface is configured to connect a plurality of terminals (3) or transmitter and receiver units (3) which enable an active connection to be established between the mobile operating device (2) and the data transmission remote station (9) from several different stations.

26. Safe data transmission remote station as claimed in claim 16, **characterised in that** the digital data processing means (48, 49) are designed to operate multiple circuits, in particular two circuits, independently.

27. Safe data transmission remote station as claimed in claim 26, **characterised in that** the digital data processing means (48, 49) are based on a diversity design.

28. Safe data transmission remote station as claimed in one of claims 16 to 27, **characterised in that** at least one third interface (47) is configured to establish a permanent data connection to the functional controller (10) of the controllable technical unit (60), and the data transmission remote station (9) transmits non-safety critical command states, data and control commands as a gateway between a temporary actively connected operating device (2) and the functional controller (10) of the controllable technical unit (60).

29. Safe data transmission remote station as claimed in claim 28, **characterised in that** it is configured to convert the physical or logical data format for the data transmitted between the operating device (2) and the functional controller (10) and optionally to store the data temporarily.

30. Safe data transmission remote station as claimed in one of claims 16 to 29, **characterised in that** means are provided for ascertaining the current time.

31. Safe data transmission remote station as claimed in one of claims 16 to 30, **characterised in that** the data transmission remote station (9) is structurally combined with the functional controller (10) of the controllable technical unit (60) or is integrated in it.

32. Safe data transmission remote station as claimed in one or more of claims 16 to 31, **characterised in that** the data transmission remote station (9) is structurally combined with a terminal or a transmitter and receiver unit.

## Revendications

1. Procédé pour établir une liaison active de données et/ou de signaux intermittente entre un dispositif utilisateur mobile (2) et une installation technique pouvant être commandée (60) avec interconnexion d'un poste correspondant de transmission de données sécurisé (9), dans lequel le dispositif utilisateur mobile (2) présente au moins un élément de commutation de sécurité (38, 39, 70) avec plus d'un état de commutation ou de commande stable, en particulier à la manière d'un interrupteur d'urgence (38), d'un interrupteur d'arrêt ou de protection ou d'un sélecteur de modes opérationnels (70), ledit élément de commutation de sécurité (38, 39, 70), une fois la liaison active complètement établie, étant couplé de façon fonctionnelle dans un circuit de sécurité (16) de l'installation technique pouvant être commandée (60), dans lequel le poste correspondant de transmission de données (9) est intégré de façon permanente au niveau des données et/ou des signaux dans le circuit de sécurité (16) de l'installation technique pouvant être commandée (60) et peut alors alimenter de façon équivalente sur le plan fonctionnel, au moyen d'interfaces (52, 53, 71) et d'éléments de commutation appropriés, au moins deux états de commutation différents de l'élément de commutation de sécurité (38, 39, 70) dans le circuit de sécurité (16), **caractérisé en ce que** suite à l'établissement d'une liaison active de données et/ou de signaux entre le dispositif utilisateur mobile (2) et le poste correspondant de transmission de données (9), et avant même le couplage fonctionnel de l'élément de commutation de sécurité (38, 39, 70) dans le circuit de sécurité (16), une comparaison de l'état actuel de commutation ou de commande de l'élément de commutation de sécurité (38, 39, 70) du dispositif utilisateur (2) avec l'état de commutation ou de commande actuellement alimenté dans le circuit de sécurité (16) du poste correspondant de transmission de données (9) est effectuée, et **en ce qu'**en cas d'écart constaté entre l'état actuel de commutation ou de commande de l'élément de commutation de sécurité (38, 39, 70) et l'état de commutation ou de commande actuellement alimenté par le poste correspondant de transmission de données (9) dans le circuit de sécurité (16), une notification concernant cet écart est envoyée à l'utilisateur (1) du dispositif utilisateur mobile (2), ou **en ce qu'**une invitation est envoyée à l'utilisateur (1) pour qu'il établisse pour l'élément de commutation de sécurité (38, 39, 70) au niveau du dispositif utilisateur (2) un certain état de commande ou de commutation.

2. Procédé selon la revendication 1, **caractérisé en ce qu'**une invitation est envoyée à l'utilisateur (1) pour qu'il confirme le couplage fonctionnel prévu de l'élément de commutation de sécurité (38, 39, 70) dans le circuit de sécurité (16) par une certaine opération volontaire.

3. Procédé selon la revendication 1, **caractérisé en ce que** le couplage fonctionnel de l'élément de commutation de sécurité (38, 39, 70) dans le circuit de sécurité (16) n'a lieu qu'après la détection d'une opération volontaire par l'utilisateur (1), et que le reste du suivi continu du signal alimenté par le poste correspondant de transmission de données (9) dans le circuit de sécurité (16) n'est effectué qu'ensuite à l'aide de l'état de commutation ou de l'état de commande réel de l'élément de commutation de sécurité (38, 39, 70).

4. Procédé selon la revendication 3, **caractérisé en ce que** l'opération volontaire est la confirmation d'un élément de commutation de sécurité (38, 39, 70) du dispositif utilisateur mobile (2).

5. Procédé selon la revendication 4, **caractérisé en ce que** l'opération volontaire consiste à faire passer l'état de commande de l'élément de commutation de sécurité (38, 39, 70) d'un premier état de commande, qui est différent de l'état de commande couplé du circuit de sécurité (16), à un deuxième état de commande, qui concorde avec l'état de commande couplé du circuit de sécurité (16).

6. Procédé selon l'une quelconque des revendications 1 à 5, **caractérisé en ce que** le couplage fonctionnel de l'élément de commutation de sécurité (38, 39, 70) n'a lieu qu'après la détection d'une concordance entre l'état de commande de l'élément de commutation de sécurité (38, 39, 70) du dispositif utilisateur (2) et l'état de commande alimenté par le poste correspondant de transmission de données (9) dans le circuit de sécurité (16), et que le reste du suivi continu du signal alimenté par le poste correspondant de transmission de données (9) dans le circuit de sécurité (16) n'est effectué qu'ensuite à l'aide de l'état de commutation ou de l'état de commande réel de l'élément de commutation de sécurité (38, 39, 70).

7. Procédé selon l'une quelconque des revendications 1 à 6, **caractérisé en ce qu'**il est vérifié si l'installation technique pouvant être commandée (60), ou le l'état de commande alimenté par le poste correspondant de transmission de données (9) dans le circuit de sécurité (16), est verrouillé(e) contre toute modification par des personnes non autorisées.

8. Procédé selon la revendication 7, **caractérisé en ce que** c'est uniquement en l'absence de tout verrouillage que le couplage fonctionnel de l'élément de commutation de sécurité (38, 39, 70) est effectué, et que le reste du suivi continu du signal alimenté par le poste correspondant de transmission de données (9) dans le circuit de sécurité (16) n'est effectué qu'ensuite à l'aide de l'état de commutation ou de l'état de commande réel de l'élément de commutation de sécurité (38, 39, 70).

9. Procédé selon la revendication 7 ou 8, **caractérisé en ce qu'**en cas de présence d'un verrouillage contre toute modification non autorisée, l'utilisateur du dispositif utilisateur mobile (2) reçoit une notification avec des indications concernant ce verrouillage, lesdites indications comprenant en particulier des indications concernant la personne à l'origine du verrouillage, l'instant de l'instigation, la durée prévue ou le motif du verrouillage.

10. Procédé selon l'une quelconque des revendications 7 à 9, **caractérisé en ce que** le verrouillage est levé uniquement suite à l'entrée et à la vérification positive d'une identification d'utilisateur et/ou d'un mot de passe.

11. Procédé selon l'une quelconque des revendications 1 à 10, **caractérisé en ce que** les instructions de commande du dispositif utilisateur (2) sont entièrement débloquées, ou retransmises à la commande fonctionnelle (10) de l'installation technique pouvant être commandée (60) uniquement lorsque l'élément de commutation de sécurité (38, 39, 70) est entièrement couplé dans le circuit de sécurité (16) sur le plan fonctionnel.

12. Procédé selon l'une quelconque des revendications 1 à 11, **caractérisé en ce qu'**avant le couplage de l'élément de commutation de sécurité (38, 39, 70) dans le circuit de sécurité (16) et/ou avant la connexion de données et/ou d'ordres de commande quelconques du dispositif utilisateur (2) à la commande fonctionnelle (10) de l'installation technique pouvant être commandée (60), on vérifie si l'établissement de la communication provoque des états concurrents, involontaires et potentiellement critiques pour la sécurité, avec un autre dispositif utilisateur (2) se trouvant déjà en liaison active auparavant, et **en ce que** dans un tel cas, l'établissement complet de la liaison active avec l'autre dispositif utilisateur (2) est empêché.

13. Procédé pour couper une liaison active de données et/ou de signaux intermittente entre un dispositif utilisateur mobile (2) et une installation technique pouvant être commandée (60) avec interconnexion d'un poste correspondant de transmission de données sécurisé (9), dans lequel le dispositif utilisateur mobile (2) présente au moins un élément de commutation de sécurité (38, 39, 70) avec plus d'un état stable de commutation ou de commande, en particulier à la manière d'un interrupteur d'urgence (38), d'un commutateur d'arrêt ou de protection ou d'un sélecteur de modes opérationnels (70), ledit élément de commutation de sécurité (38, 39, 70), une fois la liaison active complètement établie, étant couplé sur le plan fonctionnel dans un circuit de sécurité (16) de l'installation technique pouvant être commandée (60), et dans lequel le poste correspondant de transmission de données (9) est intégré de façon permanente au niveau des données et/ou des signaux dans le circuit de sécurité (16) de l'installation technique pouvant être commandée (60) et peut alimenter de façon équivalente sur le plan fonctionnel, au moyen d'interfaces (52, 53, 71) et d'éléments de commutation appropriés, les états de commutation de l'élément de commutation de sécurité (38, 39, 70) dans le circuit de sécurité (16), **caractérisé en ce que** le dernier état de commande de l'élément de commutation de sécurité (38, 39, 70) détecté comme valable avant la coupure de la liaison active est mémorisé, et après la coupure de la liaison active, continue d'être alimenté de façon équivalente sur le plan fonctionnel par le poste correspondant de transmission de données (9) dans le circuit de sécurité (16), et **en ce qu'**en plus du dernier état de commande de l'élément de commutation de sécurité (38, 39, 70) détecté comme valable, une identification de l'utilisateur du dernier dispositif utilisateur (2) en liaison active est également détecté et mémorisé, ainsi que le cas échéant d'autres informations, en particulier concernant l'instant de la dernière modification de l'état de commande ou de la coupure de la liaison active.

14. Procédé selon la revendication 13, **caractérisé en ce que** l'utilisateur du dispositif utilisateur (2) lors de la coupure de la liaison active indique si les états de commande mémorisés dans le poste correspondant de transmission de données (9) doivent être bloqués contre toute modification non autorisée.

15. Procédé selon la revendication 14, **caractérisé en ce que** l'utilisateur indique avec l'indication ou l'instruction de verrouillage des états opérationnels ou de commande également une identification d'utilisateur et/ou un mot de passe.

16. Poste correspondant de transmission de données sécurisé (9) avec au moins une première interface pour un établissement intermittent d'une liaison active de données et/ou de signaux avec un dispositif utilisateur mobile (2), ledit dispositif utilisateur (2) présentant au moins un élément de commutation de sécurité (38, 39, 70), ainsi qu'avec au moins une deuxième interface (52, 53, 71) pour l'intégration permanente de données et/ou de signaux du poste correspondant de transmission de données (9) dans le circuit de sécurité (16) d'une installation technique pouvant être commandée (60), **caractérisé en ce que** le poste correspondant de transmission de données (9) présente des moyens de mémoire (45, 50, 51) dans lesquels est mémorisé le dernier état de commande détecté comme valable dudit au moins un élément de commutation de sécurité (38, 39, 70) d'un dispositif utilisateur (2) en liaison active, même après l'interruption de cette liaison active, et **en ce que** des moyens de traitement de données numérique (48, 49), en particulier à la manière de processeurs ou de composants logiques programmables sont prévus qui commandent les signaux et les flux de données à travers les interfaces (46, 47, 52, 53, 71) du poste correspondant de transmission de données (9) et effectuent des comparaisons et vérifications de telle sorte qu'après établissement d'une liaison active de données et/ou de signaux entre le dispositif utilisateur mobile (2) et le poste correspondant de transmission de données (9) et avant même le couplage fonctionnel de l'élément de commutation de sécurité (38, 39, 70) dans le circuit de sécurité (16), une comparaison de l'état actuel de commutation ou de commande de l'élément de commutation de sécurité (38, 39, 70) du dispositif utilisateur (2) avec l'état de commutation ou de commande actuellement alimenté dans le circuit de sécurité (16) du poste correspondant de transmission de données (9) est effectuée, et **en ce qu'**en cas de constatation d'un écart entre l'état actuel de commutation ou de commande de l'élément de commutation de sécurité (38, 39, 70) et l'état de commutation ou de commande actuellement alimenté dans le circuit de sécurité (16) du poste correspondant de transmission de données (9), une notification concernant cet écart est envoyée à l'utilisateur (1) du dispositif utilisateur mobile (2), ou **en ce qu'**une invitation est envoyée à l'utilisateur (1) pour qu'il établisse pour l'élément de commutation de sécurité (38, 39, 70) au niveau du dispositif utilisateur (2) un certain état de commande ou de commutation.

17. Poste correspondant de transmission de données sécurisé selon la revendication 16, **caractérisé en ce que** les moyens de mémoire (45) pour mémoriser l'état de commande de l'élément de commutation de sécurité (38, 39, 70) sont réalisés de façon non volatile, de sorte que l'état de commutation est maintenu même après une panne de l'alimentation en énergie.

18. Poste correspondant de transmission de données sécurisé selon la revendication 16 ou 17, **caractérisé en ce que** ladite au moins une deuxième interface (52, 53, 71) est réalisée pour le couplage équivalent sur le plan fonctionnel de l'état de commande mémorisé dudit au moins un élément de commutation de sécurité (38, 39, 70).

19. Poste correspondant de transmission de données sécurisé selon l'une quelconque des revendications 16 à 18, **caractérisé en ce que** ladite au moins une première interface est réalisée pour établir une liaison active de signaux et/ou de données avec au moins un dispositif utilisateur mobile (2) avec interconnexion d'un réseau de communication (21), auquel est couplée une pluralité d'abonnés de communication, en particulier une pluralité de dispositifs utilisateurs mobiles (2) et/ou une pluralité de postes correspondants de transmission de données sécurisés (9).

20. Poste correspondant de transmission de données sécurisé selon l'une quelconque des revendications 16 à 19, **caractérisé en ce que** ladite au moins une première interface est prévue pour établir une liaison de données intermittente guidée avec un dispositif utilisateur (2).

21. Poste correspondant de transmission de données sécurisé selon la revendication 20, **caractérisé en ce que** ladite au moins une première interface est réalisée pour être amovible sous tension et **en ce que** l'établissement et/ou la coupure de la liaison conductrice vers un dispositif utilisateur mobile (2) est possible en cours de fonctionnement lorsque le dispositif utilisateur (2) est sous tension et/ou le poste correspondant de transmission de données (9) est sous tension, sans dégradation fonctionnelle temporaire ou permanente.

22. Poste correspondant de transmission de données sécurisé selon la revendication 20 ou 21, **caractérisé en ce que** l'alimentation en énergie pour un dispositif utilisateur mobile (2) connecté est également effectuée à travers ladite au moins une première interface.

23. Poste correspondant de transmission de données sécurisé selon l'une quelconque des revendications 16 à 18, **caractérisé en ce que** ladite au moins une première interface est réalisée pour établir une liaison de données intermittente non guidée, en particulier une liaison radio ou infrarouge.

24. Poste correspondant de transmission de données sécurisé selon l'une quelconque des revendications 16 à 23, **caractérisé en ce que** ladite au moins une première interface est réalisée pour établir une liaison active avec un dispositif utilisateur mobile (2) avec interconnexion d'un terminal de raccordement (3) ou d'un émetteur/récepteur (3).

25. Poste correspondant de transmission de données sécurisé selon la revendication 24, **caractérisé en ce que** ladite au moins une première interface est réalisée pour raccorder une pluralité de bornes de raccordement (3) ou d'émetteurs/récepteurs (3), permettant l'établissement d'une liaison active entre le dispositif utilisateur mobile (2) et le poste correspondant de transmission de données (9) à partir de plusieurs endroits différents.

26. Poste correspondant de transmission de données sécurisé selon la revendication 16, **caractérisé en ce que** les moyens de traitement de données numérique (48, 49) sont configurés à plusieurs circuits, en particulier à deux circuits.

27. Poste correspondant de transmission de données sécurisé selon la revendication 26, **caractérisé en ce que** les moyens de traitement de données numérique (48, 49) sont réalisés de façon diversifiée.

28. Poste correspondant de transmission de données sécurisé selon l'une quelconque des revendications 16 à 27, **caractérisé en ce qu'**au moins une troisième interface (47) est réalisée pour l'intégration de données permanente dans la commande fonctionnelle (10) de l'installation technique pouvant être commandée (60), et **en ce que** le poste correspondant de transmission de données (9) transmet des états de commande, des données et des instructions de commande non critiques pour la sécurité en tant que passerelle entre un dispositif utilisateur (2) en liaison active intermittente et la commande fonctionnelle (10) de l'installation technique pouvant être commandée (60).

29. Poste correspondant de transmission de données sécurisé selon la revendication 28, **caractérisé en ce qu'**il est réalisé pour convertir le format de données physique ou logique pour les données transmises entre le dispositif utilisateur (2) et la commande fonctionnelle (10) et qu'il est éventuellement prévu pour une mémorisation intermédiaire des données.

30. Poste correspondant de transmission de données sécurisé selon l'une quelconque des revendications 16 à 29, **caractérisé en ce que** des moyens sont réalisés pour déterminer l'heure actuelle.

31. Poste correspondant de transmission de données sécurisé selon l'une quelconque des revendications 16 à 30, **caractérisé en ce que** le poste correspondant de transmission de données (9) est combiné de par sa construction avec la commande fonctionnelle (10) de l'installation technique pouvant être commandée (60) ou incorporé dans celle-ci.

32. Poste correspondant de transmission de données sécurisé selon l'une quelconque ou plusieurs des revendications précédentes 16 à 31, **caractérisé en ce que** le poste correspondant de transmission de données (9) est combiné de par sa construction avec un terminal de raccordement ou un émetteur/récepteur.
